# EUROPEAN PATENT APPLICATION

(11) **EP 4 648 321 A1**
(43) Date of publication of application: **12.11.2025**
(21) Application number: 24738431.6
(22) Date of filing: 02.01.2024
(51) Int. Cl.: H04L 1/06

(54) **METHOD AND APPARATUS USED IN NODE FOR WIRELESS COMMUNICATION**

(30) Priority: 03.01.2023 CN 202310003358
(71) Applicant: SHANGHAI LANGBO COMMUNICATION TECHNOLOGY COMPANY LIMITED, Shanghai 200240 (CN)
(72) Inventor: WU, Lu, Shanghai 201206 (CN); ZHANG, Xiaobo, Shanghai 201206 (CN)
(74) Representative: Gunzelmann, Rainer
(86) International application number: PCT/CN2024/070056
(87) International publication number: WO 2024/146498

(57) **Abstract**

The present application discloses a method and an apparatus used in a node for wireless communication. A first node receives first CSI configuration information; receives first signaling; receives a first RS resource; and sends a first CSI report. The first CSI configuration information is used for indicating the first RS resource. Measurement for the first RS resource is for generating the first CSI report. The first CSI configuration information is used for indicating M index sets, wherein M is a positive integer greater than 1. Any one of the M index sets comprises at least one index group. Any index group in the M index sets comprises at least one index. Any index in the M index sets is used for indicating one port of the first RS resource. Any index group in the M index sets corresponds to one rank. The first signaling is used for determining a first port group. According to the present application, the efficiency is improved, and the system implementation complexity is reduced.

## Description

### Technical Field

The present application relates to a transmission method and apparatus in a wireless communication system, and in particular to a transmission method and apparatus for wireless signals in a wireless communication system supporting a cellular network.

### Background Art

In a wireless communication system supporting multi-antenna transmission, it is a common technology for a UE (User Equipment) to generate and feedback CSI (Channel Status Information) based on at least one of channel measurement or interference measurement to assist the base station in multi-antenna processing. In a 5G NR (New Radio) system, a CSI report includes at least one of {CRI (CSI-RS Resource Indicator), RI (Rank indication), PMI (Precoding matrix indicator), CQI (Channel quality indicator)}. In NR R (Release)-18, research on network energy efficiency was initiated, which includes some key technologies, such as dynamical adaptation of spatial elements, e.g., active transceiver chains and active antenna panels, and updating CSI-RS configuration, etc.

### Summary of the Invention

The inventor found through research that how to generate a CSI (Channel Status Information) report based on RS (Reference Signal) resources is a key issue.

In response to the above problems, the present application discloses a solution. It should be noted that in the description of the present application, multi-antenna panels are merely used as a typical application scenario or example; the present application can also be applied to the application scenario of single-antenna panels. Furthermore, adopting a unified design scheme for different scenarios (including but not limited to multi-antenna panels, single-antenna panels, etc.) can also help reduce hardware complexity and cost. In the absence of conflict, the embodiments and features in the embodiments in any node of the present application can be applied to any other node. In the absence of conflict, the embodiments and features in the embodiments of the present application can be arbitrarily combined with each other.

As an embodiment, the interpretation of the terminology in the present application is based on the definition of the 3GPP standard protocol TS36 series.

As an embodiment, the interpretation of the terminology in the present application is based on the definition of the 3GPP standard protocol TS38 series.

As an embodiment, the interpretation of the terminology in the present application is based on the definition of the 3GPP standard protocol TS37 series.

As an embodiment, the interpretation of the terminology in the present application is based on the definition of the IEEE (Institute of Electrical and Electronics Engineers) standard protocol.

The present application discloses a method used in a first node for wireless communication. The method includes:
receiving first CSI configuration information; receiving first signaling; receiving a first RS resource; and
transmitting a first CSI report,
where the first CSI configuration information is used to indicate the first RS resource, and the measurement on the first RS resource is used to generate the first CSI report; the first CSI configuration information is used to indicate M index sets, where M is a positive integer greater than 1; any index set among the M index sets includes at least one index group, and any index group in the M index sets includes at least one index; any index in the M index sets is used to indicate a port of the first RS resource, and any index group in the M index sets corresponds to a rank; the first signaling is used to determine a first port group; the first CSI report includes a first rank and a first CQI, and the calculation of the first CQI is conditioned on the ports of the first RS resource that are indicated by the first index group, and the first index group is an index group in the first index set whose corresponding rank is equal to the first rank, and the first index set depends on the first port group.

As an embodiment, the problem to be solved by the present application includes: generating a CSI report based on the measurement on RS resources.

According to one aspect of the present application, the first port group is one of M1 port groups, where M1 is a positive integer greater than 1; the M1 port groups each include at least one port of the first RS resource, and the M1 port groups are pairwise distinct; any port group among the M1 port groups corresponds to one of the M index sets, and any index set among the M index sets corresponds to one or more port groups among the M1 port groups; the first index set is an index set corresponding to the first port group among the M index sets; the first rank is not greater than the number of ports included in the first port group.

According to one aspect of the present application, the number of index groups included in the index sets respectively corresponding to the M1 port groups is not greater than the number of ports included in the M1 port groups.

According to one aspect of the present application, the first index set includes R index groups, the R index groups correspond to R ranks respectively, the R ranks are pairwise distinct, and the first rank is one of the R ranks, where R is a positive integer greater than 1; the first index group is an index group corresponding to the first rank among the R index groups.

According to one aspect of the present application, there are two index groups belonging to two index sets among the M index sets respectively and corresponding to the same rank.

According to one aspect of the present application, the first port group includes non-zero-power ports of the first RS resource.

According to one aspect of the present application, the method includes:
receiving at least one RS resource other than the first RS resource in the first RS resource group; and
receiving a second RS resource group,
where the first RS resource group is configured for channel measurement, and the second RS resource group is configured for interference measurement; the first CSI report includes a first RS resource indicator, and the first RS resource indicator is used to indicate the first RS resource from the first RS resource group; the first rank and the first CQI are obtained based on the first RS resource indicator.

The present application discloses a method used in a second node for wireless communication. The method includes:
transmitting first CSI configuration information; transmitting first signaling; transmitting a first RS resource; and
receiving a first CSI report,
where the first CSI configuration information is used to indicate the first RS resource, and the measurement on the first RS resource is used to generate the first CSI report; the first CSI configuration information is used to indicate M index sets, where M is a positive integer greater than 1; any index set among the M index sets includes at least one index group, and any index group in the M index sets includes at least one index; any index in the M index sets is used to indicate a port of the first RS resource, and any index group in the M index sets corresponds to a rank; the first signaling is used to determine a first port group; the first CSI report includes a first rank and a first CQI, and the calculation of the first CQI is conditioned on the ports of the first RS resource that are indicated by the first index group, and the first index group is an index group in the first index set whose corresponding rank is equal to the first rank, and the first index set depends on the first port group.

According to one aspect of the present application, the first port group is one of M1 port groups, where M1 is a positive integer greater than 1; the M1 port groups each include at least one port of the first RS resource, and the M1 port groups are pairwise distinct; any port group among the M1 port groups corresponds to one of the M index sets, and any index set among the M index sets corresponds to one or more port groups among the M1 port groups; the first index set is an index set corresponding to the first port group among the M index sets; the first rank is not greater than the number of ports included in the first port group.

According to one aspect of the present application, the number of index groups included in the index sets respectively corresponding to the M1 port groups is not greater than the number of ports included in the M1 port groups.

According to one aspect of the present application, the first index set includes R index groups, the R index groups correspond to R ranks respectively, the R ranks are pairwise distinct, and the first rank is one of the R ranks, where R is a positive integer greater than 1; the first index group is an index group corresponding to the first rank among the R index groups.

According to one aspect of the present application, there are two index groups belonging to two index sets among the M index sets respectively and corresponding to the same rank.

According to one aspect of the present application, the first port group includes non-zero-power ports of the first RS resource.

According to one aspect of the present application, the method includes:
transmitting at least one RS resource other than the first RS resource in the first RS resource group; and
transmitting a second RS resource group,
where the first RS resource group is configured for channel measurement, and the second RS resource group is configured for interference measurement; the first CSI report includes a first RS resource indicator, and the first RS resource indicator is used to indicate the first RS resource from the first RS resource group; the first rank and the first CQI are obtained based on the first RS resource indicator.

The present application discloses a first node device used for wireless communication. The first node device includes:
a first receiver configured to receive first CSI configuration information; receive first signaling; and receive a first RS resource; and
a first transmitter configured to transmit a first CSI report,
where the first CSI configuration information is used to indicate the first RS resource, and the measurement on the first RS resource is used to generate the first CSI report; the first CSI configuration information is used to indicate M index sets, where M is a positive integer greater than 1; any index set among the M index sets includes at least one index group, and any index group in the M index sets includes at least one index; any index in the M index sets is used to indicate a port of the first RS resource, and any index group in the M index sets corresponds to a rank; the first signaling is used to determine a first port group; the first CSI report includes a first rank and a first CQI, and the calculation of the first CQI is conditioned on the ports of the first RS resource that are indicated by the first index group, and the first index group is an index group in the first index set whose corresponding rank is equal to the first rank, and the first index set depends on the first port group.

The present application discloses a second node device used for wireless communication. The second node device includes:
a second transmitter configured to transmit first CSI configuration information; transmit first signaling; and transmit a first RS resource; and
a second receiver configured to receive a first CSI report,
where the first CSI configuration information is used to indicate the first RS resource, and the measurement on the first RS resource is used to generate the first CSI report; the first CSI configuration information is used to indicate M index sets, where M is a positive integer greater than 1; any index set among the M index sets includes at least one index group, and any index group in the M index sets includes at least one index; any index in the M index sets is used to indicate a port of the first RS resource, and any index group in the M index sets corresponds to a rank; the first signaling is used to determine a first port group; the first CSI report includes a first rank and a first CQI, and the calculation of the first CQI is conditioned on the ports of the first RS resource that are indicated by the first index group, and the first index group is an index group in the first index set whose corresponding rank is equal to the first rank, and the first index set depends on the first port group.

As an embodiment, compared with the traditional solution, the present application has the following advantages:
when generating the CSI report, different application scenarios are considered, such as different ports, different beams, different antennas, different spatial characteristics, etc.

### Brief Description of the Drawings

By reading the detailed description of the non-limiting embodiments in the following drawings, other features, purposes and advantages of the present application will become more obvious.
FIG. 1 shows a flowchart of first CSI configuration information, first signaling, a first RS resource and a first CSI report according to an embodiment of the present application;
FIG. 2 shows a schematic diagram of a network architecture according to an embodiment of the present application;
FIG. 3 shows a schematic diagram of an embodiment of a wireless protocol architecture for a user plane and a control plane according to an embodiment of the present application;
FIG. 4 shows a schematic diagram of a first communication device and a second communication device according to an embodiment of the present application;
FIG. 5 shows a flowchart of wireless transmission according to an embodiment of the present application;
FIG. 6 shows a schematic diagram of a first index set and a first port group according to an embodiment of the present application;
FIG. 7 shows a schematic diagram of M1 port groups and corresponding index sets according to an embodiment of the present application;
FIG. 8 shows a schematic diagram of the relationship between a first index group and a first rank according to an embodiment of the present application;
FIG. 9 shows a schematic diagram of the relationship between a first index group and a first rank according to another embodiment of the present application;
FIG. 10 shows a schematic diagram of M index sets according to an embodiment of the present application;
FIG. 11 shows a schematic diagram of a first port group according to an embodiment of the present application;
FIG. 12 shows a structural block diagram of a processing apparatus used in a first node device according to an embodiment of the present application; and
FIG. 13 shows a structural block diagram of a processing apparatus used in a second node device according to an embodiment of the present application.

### Detailed Description of Embodiments

The technical solution of the present application will be further described in detail below in conjunction with the accompanying drawings. It should be noted that, in the absence of conflict, the embodiments and features in the embodiments of the present application can be arbitrarily combined with each other.

### Embodiment 1

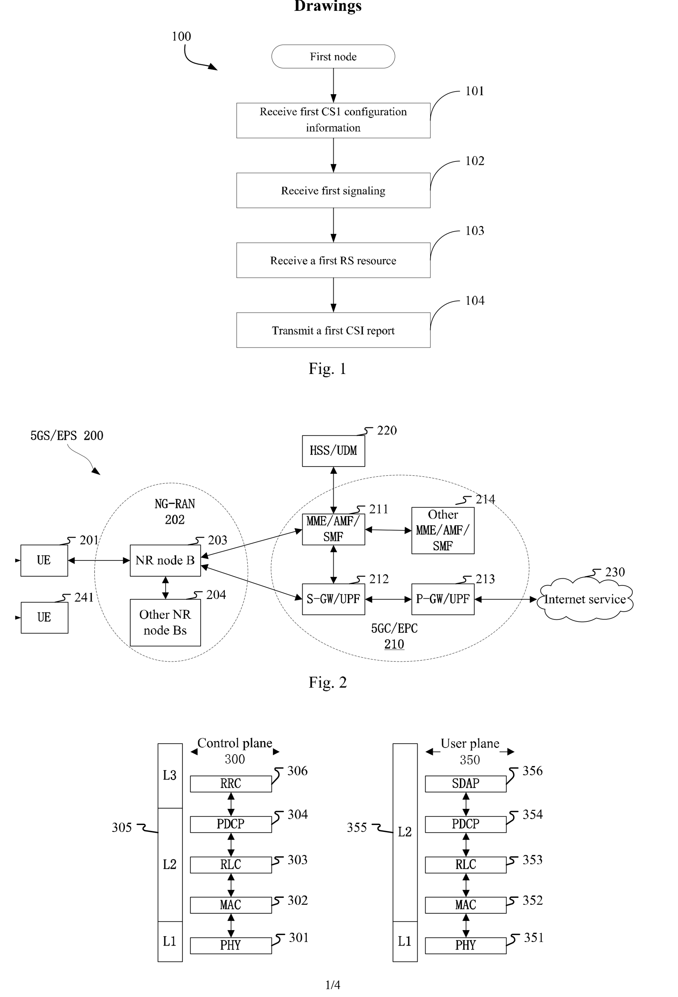

Embodiment 1 illustrates a flowchart of first CSI configuration information, first signaling, a first RS resource and a first CSI report according to an embodiment of the present application, as shown in FIG. 1. In 100 shown in FIG. 1, each box represents a step.

In Embodiment 1, a first node in the present application receives the first CSI configuration information in step 101; receives the first signaling in step 102; receives the first RS resource in step 103; and transmits the first CSI report in step 104, where the first CSI configuration information is used to indicate the first RS resource, and the measurement on the first RS resource is used to generate the first CSI report; the first CSI configuration information is used to indicate M index sets, where M is a positive integer greater than 1; any index set among the M index sets includes at least one index group, and any index group in the M index sets includes at least one index; any index in the M index sets is used to indicate a port of the first RS resource, and any index group in the M index sets corresponds to a rank; the first signaling is used to determine a first port group; the first CSI report includes a first rank and a first CQI, and the calculation of the first CQI is conditioned on the ports of the first RS resource that are indicated by the first index group, and the first index group is an index group in the first index set whose corresponding rank is equal to the first rank, and the first index set depends on the first port group.

As an embodiment, the first RS resource is configured by RRC (Radio Resource Control) signaling.

As an embodiment, the first RS resource is indicated by some or all fields of an RRC IE.

As an embodiment, the first RS resource is triggered by physical layer signaling.

As an embodiment, the first RS resource is triggered by the first signaling.

As an embodiment, the first RS resource is triggered by DCI signaling.

As an embodiment, the time domain resource occupied by the first RS resource is later than the time domain resource occupied by the first signaling.

As an embodiment, the first RS resource is a CSI-RS (Channel Status Information-Reference Signal) resource or an SS/PBCH (Synchronization Signal/Physical Broadcast Channel) block resource.

As an embodiment, the first RS resource is a CSI-RS resource.

As an embodiment, the first RS resource is a NZP (Non-Zero Power) CSI-RS resource.

As an embodiment, the first RS resource is a CSI-RS resource for channel measurement.

As an embodiment, the first RS resource is a CSI-RS resource or an SSB resource for channel measurement.

Typically, the first RS resource is used for channel measurement.

As an embodiment, the first CSI configuration information is carried by higher layer signaling.

As an embodiment, the first CSI configuration information is carried by RRC signaling.

As an embodiment, the first CSI configuration information includes one or more RRC IEs.

As an embodiment, the first CSI configuration information is IE CSI-ReportConfig.

As an embodiment, the first CSI configuration information is used to indicate a first CSI resource configuration, and the first CSI resource configuration is used to indicate a first RS resource.

As an embodiment, the first CSI configuration information is used to indicate a first CSI resource configuration and a second CSI resource configuration, the first CSI resource configuration is used to indicate the first RS resource, and the second CSI resource configuration is used to indicate a second RS resource; the first RS resource is used for channel measurement, and the second RS resource is used for interference measurement.

As an embodiment, the first CSI configuration information is used to indicate a first CSI resource configuration, a second CSI resource configuration and a third CSI resource configuration, the first CSI resource configuration is used to indicate a first RS resource, the second CSI resource configuration is used to indicate a second RS resource, and the third CSI resource configuration is used to indicate a third RS resource; the first RS resource is used for channel measurement, and the second RS resource and the third RS resource are used for interference measurement.

As a sub-embodiment of the above embodiment, the first receiver receives the third RS resource.

As a sub-embodiment of the above embodiment, the method in the first node includes: receiving the third RS resource.

As an embodiment, the first RS resource is a CSI-RS resource for channel measurement, and the second RS resource is a CSI-IM (Channel State Information-Interference Measurement) resource.

As an embodiment, the first RS resource is a CSI-RS resource used for channel measurement, the second RS resource is a CSI-IM resource, and the third RS resource is an NZP CSI-RS resource used for interference measurement.

As an embodiment, the first CSI configuration information is used to indicate a first CSI resource configuration and a second CSI resource configuration, the first CSI resource configuration is used to indicate a first RS resource group, the first RS resource belongs to the first RS resource group, the second CSI resource configuration is used to indicate a second RS resource group, and the second RS resource belongs to the second RS resource group; the first RS resource group is used for channel measurement, and the second RS resource group is used for interference measurement.

As an embodiment, the first CSI configuration information is used to indicate a first CSI resource configuration, a second CSI resource configuration and a third CSI resource configuration, the first CSI resource configuration is used to indicate a first RS resource group, the first RS resource belongs to the first RS resource group, the second CSI resource configuration is used to indicate a second RS resource group, the second RS resource belongs to the second RS resource group, the third CSI resource configuration is used to indicate a third RS resource group, and the third RS resource belongs to the third RS resource group; the first RS resource group is used for channel measurement, the second RS resource group and the third RS resource group are used for interference measurement.

As a sub-embodiment of the above embodiment, the first receiver receives the third RS resource group.

As a sub-embodiment of the above embodiment, the method in the first node includes: receiving the third RS resource group.

As an embodiment, the first CSI configuration information includes a resourcesForChannelMeasurement field, and the resourcesForChannelMeasurement field included in the first CSI configuration information is used to indicate the first CSI resource configuration.

As an embodiment, the first CSI configuration information includes a csi-IM-ResourcesForInterference field, and the csi-IM-ResourcesForInterference field included in the first CSI configuration information is used to indicate the second CSI resource configuration.

As an embodiment, the first CSI configuration information includes an nzp-CSI-RS-ResourcesForInterference field, and the nzp-CSI-RS-ResourcesForInterference field included in the first CSI configuration information is used to indicate the third CSI resource configuration.

As an embodiment, the first RS resource group includes a plurality of CSI-RS resources for channel measurement.

As an embodiment, the first RS resource group includes a plurality of CSI-RS resources or SSB resources for channel measurement.

As an embodiment, the first RS resource group includes a plurality of CSI-RS resources or SSB resources.

As an embodiment, the first RS resource group includes a plurality of CSI-RS resources.

As an embodiment, the first RS resource group includes a plurality of NZP CSI-RS resources.

As an embodiment, the first RS resource group includes a plurality of CSI-RS resources for channel measurement, and the second RS resource group includes a plurality of CSI-IM resources.

As an embodiment, the first RS resource group includes a plurality of CSI-RS resources for channel measurement, the second RS resource group includes a plurality of CSI-IM resources, and the third RS resource group includes a plurality of NZP CSI-RS resources for interference measurement.

As an embodiment, the first RS resource group includes a plurality of CSI-RS resources or SSB resources for channel measurement, and the second RS resource group includes a plurality of CSI-IM resources.

As an embodiment, the first RS resource group includes a plurality of CSI-RS resources or SSB resources for channel measurement, the second RS resource group includes a plurality of CSI-IM resources, and the third RS resource group includes a plurality of NZP CSI-RS resources for interference measurement.

As an embodiment, the first CSI resource configuration is IE CSI-ResourceConfig, and the identifier of the first CSI resource configuration is CSI-ResourceConfigId.

Typically, a first CSI report configuration includes reporting quantities of the first CSI report, and the reporting quantities of the first CSI report include RI (Rank Indicator) and CQI (Channel quality indicator).

As an embodiment, the first CSI report is a non-PMI-based CSI report.

As an embodiment, the first CSI report configuration includes reporting quantities of the first CSI report, and the reporting quantities of the first CSI report include CRI (CSI-RS Resource Indicator), RI and CQI.

As an embodiment, the first CSI report configuration includes reporting quantities of the first CSI report, and the reporting quantities of the first CSI report do not include PMI.

As an embodiment, the first CSI report configuration includes reporting quantities of the first CSI report, and the reporting quantities of the first CSI report include only CRI, RI and CQI.

As an embodiment, the specific definitions of IE CSI-ReportConfig, resourcesForChannelMeasurement, csi-IM-ResourcesForInterference, nzp-CSI-RS-ResourcesForInterference, IE CSI-ResourceConfig, and CSI-ResourceConfigId can be found in Section 6.3.2 of 3GPP TS 38.331.

As an embodiment, the first CSI report is generated based on at least channel information generated by measurement on the first RS resource.

As an embodiment, the first CSI report is generated based on at least channel measurement performed on the first RS resource.

As an embodiment, the first CSI report is generated based on channel information generated by measurement on the first RS resource and the second RS resource.

As an embodiment, the first CSI report is generated based on channel information generated by the measurement on the first RS resource, the second RS resource and the third RS resource.

As an embodiment, the first CSI report is generated based on the channel measurement performed on the first RS resource and the interference measurement performed on the second RS resource.

As an embodiment, the first CSI report is generated based on the channel measurement performed on the first RS resource, the interference measurement performed on the second RS resource and the interference measurement performed on the third RS resource.

As an embodiment, at least the measurement on the first RS resource is used to obtain the reporting quantities of the first CSI report.

As an embodiment, the measurement on the first RS resource and the measurement on the second RS resource are used to obtain the reporting quantities of the first CSI report.

As an embodiment, the measurement on the first RS resource, the measurement on the second RS resource and the measurement on the third RS resource are used to obtain the reporting quantities of the first CSI report.

As an embodiment, at least the measurement on the first RS resource is used to obtain at least CRI, RI, and CQI.

As an embodiment, the measurement on the first RS resource and the measurement on the second RS resource are used to obtain at least CRI, RI, and CQI.

As an embodiment, the measurement on the first RS resource, the measurement on the second RS resource and the measurement on the third RS resource are used to obtain at least CRI, RI, and CQI.

As an embodiment, at least the measurement on the first RS resource is only used to obtain CRI, RI, and CQI.

As an embodiment, the measurement on the first RS resource and the measurement on the second RS resource are only used to obtain CRI, RI, and CQI.

As an embodiment, the measurement on the first RS resource, the measurement on the second RS resource and the measurement on the third RS resource are only used to obtain CRI, RI, and CQI.

As an embodiment, at least the measurement on the first RS resource is used to obtain a channel matrix.

As an embodiment, the first CSI configuration information includes M pieces of sub-information, and the M pieces of sub-information each include the M index sets.

As an embodiment, the names of the M pieces of sub-information all include non-PMI-PortIndication.

As an embodiment, the M pieces of sub-information all belong to the non-PMI-PortIndication field.

As an embodiment, the names of the M pieces of sub-information all include non-PMI-Port.

As an embodiment, the names of the M pieces of sub-information all include PortIndex.

As an embodiment, the names of the M pieces of sub-information all include PortIndexFor8Ranks.

As an embodiment, any piece of sub-information among the M pieces of sub-information includes at least one of portIndex8, portIndex4, portIndex2 or portIndex1.

As an embodiment, any index in the M index sets is a non-negative integer.

As an embodiment, any index in the M index sets is a non-negative integer less than the number of ports of the first RS resource.

As an embodiment, the number of index groups included in any index set among the M index sets is not greater than the number of ports of the first RS resource.

As an embodiment, the number of index groups respectively included in the M index sets is equal to the number of ports of the first RS resource.

As an embodiment, the number of index groups respectively included in the M index sets is the same.

As an embodiment, the number of index groups respectively included in at least two of the M index sets is different.

As an embodiment, the number of indexes included in any index group in the M index sets is equal to the corresponding rank.

As an embodiment, a given index group is any index group in the M index sets, and the rank corresponding to the given index group is equal to the number of indexes included in the given index group.

As an embodiment, the rank corresponding to any index group in the M index sets is not greater than the number of ports of the first RS resource.

As an embodiment, the ranks corresponding to two index groups belonging to the same index set among the M index sets are different.

As an embodiment, the ranks corresponding to any two index groups belonging to the same index set among the M index sets are different.

As an embodiment, the number of indexes included in any index group in the M index sets is equal to the corresponding rank, and any two index groups belonging to the same index set among the M index sets respectively include different numbers of indexes.

As an embodiment, in at least one index set other than the first index set among the M index sets, there is at least one index group whose corresponding rank is the first rank.

As an embodiment, all indexes in any index group in the M index sets are arranged in the order of layer ordering.

As an embodiment, there are two index groups respectively belonging to two index sets among the M index sets and corresponding to different ranks.

As an embodiment, among the M index sets, there are two index sets including index groups whose respectively corresponding maximum ranks are different.

As an embodiment, among the M index sets, there are two index sets including index groups whose respectively corresponding maximum ranks are the same.

As an embodiment, the specific definitions of non-PMI-PortIndication, PortIndexFor8Ranks, portIndex8, portIndex4, portIndex2, and portIndex1 can be found in Section 6.3.2 of 3GPP TS 38.331.

As an embodiment, the first rank is not greater than the number of ports included in the first port group.

As an embodiment, the first rank is not greater than the number of ports of the first RS resource.

As an embodiment, a precoder of the ports of the first RS resource that are indicated by the first index group is an identity matrix.

As an embodiment, the sentence "a precoder of the ports of the first RS resource that are indicated by the first index group is an identity matrix" means that the precoder of the ports of the first RS resource that are indicated by the first index group is assumed to be an identity matrix.

As an embodiment, the calculation of the first CQI is not conditioned on PMI (Precoding Matrix Indicator).

As an embodiment, the calculation of the first CQI is independent of the codebook.

As an embodiment, the sentence "the calculation of the first CQI is conditioned on the ports of the first RS resource that are indicated by the first index group" means that the calculation of the first CQI is conditioned on only the ports of the first RS resource that are indicated by the first index group among all the ports of the first RS resource.

As an embodiment, the sentence "the calculation of the first CQI is conditioned on the ports of the first RS resource that are indicated by the first index group" means that the calculation of the first CQI is independent of any port other than the ports of the first RS resource that are indicated by the first index group among all the ports of the first RS resource.

As an embodiment, the sentence "the calculation of the first CQI is conditioned on the ports of the first RS resource that are indicated by the first index group" means that the precoder of the ports of the first RS resource that are indicated by the first index group is an identity matrix.

As an embodiment, the sentence "the calculation of the first CQI is conditioned on the ports of the first RS resource that are indicated by the first index group" means that the calculation of the first CQI is not conditioned on the PMI.

As an embodiment, the sentence "the calculation of the first CQI is conditioned on the ports of the first RS resource that are indicated by the first index group" means that the calculation of the first CQI is independent of the codebook.

As an embodiment, the sentence "the calculation of the first CQI is conditioned on the ports of the first RS resource that are indicated by the first index group" means that the first node calculates the first CQI based on the number of the ports of the first RS resource that are indicated by the first index group being equal to the first rank, and the ports of the first RS resource that are indicated by the first index group corresponding to different layers.

As an embodiment, the sentence "the calculation of the first CQI is conditioned on the ports of the first RS resource that are indicated by the first index group" means that the number of the ports of the first RS resource that are indicated by the first index group is equal to the first rank, and the first node calculates the first CQI based on transmitting each layer at the ports of the first RS resource that are indicated by the first index group.

As an embodiment, the sentence "the calculation of the first CQI is conditioned on the ports of the first RS resource that are indicated by the first index group" means that the first node calculates the first CQI based on the number of the ports of the first RS resource that are indicated by the first index group being equal to the first rank.

As an embodiment, the sentence "the calculation of the first CQI is conditioned on the ports of the first RS resource that are indicated by the first index group" means that the number of the ports of the first RS resource that are indicated by the first index group is equal to the first rank, and the first node calculates the first CQI based on the ports of the first RS resource that are indicated by the first index group corresponding to each layer of the first rank.

As an embodiment, the sentence "the calculation of the first CQI is conditioned on the ports of the first RS resource that are indicated by the first index group" means that the first node calculates the first CQI based on the measurement on the ports of the first RS resource that are indicated by the first index group.

As an embodiment, the sentence "the calculation of the first CQI is conditioned on the ports of the first RS resource that are indicated by the first index group" means that the first node calculates the first CQI based on the channel matrix obtained by the measurement on the ports of the first RS resource that are indicated by the first index group.

Under the limitations of the above method or embodiments, the specific algorithm for calculating the first CQI is determined by the manufacturer of the first node, or is implementation-related. A typical but non-limiting implementation is described below.

The first node first measures the ports of the first RS resource that are indicated by the first index group to obtain a channel parameter matrix H_{r×*t*}, where *r, t* are respectively the number of receiving antennas and the number of the ports of the first RS resource that are indicated by the first index group; under the condition of using the precoding matrix W_{t×*l*}, the encoded channel parameter matrix is H_{r×t} · W_{t×*l*}, where *l* is the rank or the number of layers. In one case, *l* is a positive integer not greater than *t,* and in another case, the precoding matrix is an identity matrix , where *t* = *l*.The equivalent channel capacity of H_{r×*t*} · W_{t×*l*} is calculated using the criteria such as SINR (Signal Interference Noise Ratio), EESM (Exponential Effective SINR Mapping), or RBIR (Received Block Mean Mutual Information Ratio), and then the first CQI is determined by the equivalent channel capacity by table lookup or the like. In general, the calculation of the equivalent channel capacity requires the first node to estimate the interference (including noise), and the first node can use at least the second RS resource among the second RS resource and the third RS resource in the present application to more accurately measure the interference. In general, the direct mapping from the equivalent channel capacity to the CQI value depends on the receiver performance, or hardware-related factors such as the modulation scheme.

As an embodiment, the first index group is the only index group in the first index set whose corresponding rank is equal to the first rank.

As an embodiment, the first index group is one of the plurality of index groups in the first index set whose corresponding rank is equal to the first rank.

As an embodiment, the first signaling is MAC CE signaling.

As an embodiment, the first signaling is physical layer signaling.

As an embodiment, the first signaling is UE-specific.

As an embodiment, the first signaling is non-UE-specific.

As an embodiment, the first signaling is UE group-specific.

As an embodiment, the first signaling is cell-common.

As an embodiment, the first signaling is DCI signaling.

As an embodiment, a field in the first signaling is used to determine the first port group.

As an embodiment, a plurality of fields in the first signaling are used to determine the first port group.

As an embodiment, the DCI format of the first signaling is used to determine the first port group.

As an embodiment, the first signaling is used to indicate the first port group.

As an embodiment, the first signaling explicitly indicates the first port group.

As an embodiment, the first signaling implicitly indicates the first port group.

As an embodiment, the first signaling is used to determine a zero-power port.

As an embodiment, the first signaling is used to determine a non-zero-power port.

As an embodiment, the first signaling is used to determine an active port.

As an embodiment, the first signaling is used to determine an inactive port.

As an embodiment, the first signaling is used to determine a muted port.

As an embodiment, the first signaling is used to determine an active CORESET.

As an embodiment, the first signaling is used to determine an inactive CORESET.

As an embodiment, the first signaling is used to determine a muted CORESET.

As an embodiment, the first signaling is used to determine a zero-power port of the first RS resource.

As an embodiment, the first signaling is used to determine a non-zero-power port of the first RS resource.

As an embodiment, the first signaling is used to determine all zero-power ports of the first RS resource.

As an embodiment, the first signaling is used to determine all non-zero-power ports of the first RS resource.

As an embodiment, the port includes an antenna port.

As an embodiment, the port includes a CSI-RS port.

As an embodiment, the port includes an RS port.

As an embodiment, the first signaling is used to indicate a first TCI (Transmission Configuration Indicator) state group, and the first port group depends on the first TCI state group.

As a sub-embodiment of the above embodiment, the first port group includes ports of RS resources in the first TCI state group.

As a sub-embodiment of the above embodiment, the first port group includes ports of RS resources that are QCL (Quasi Co-Located) with RS resources in the first TCI state group.

As an embodiment, the first signaling is used to indicate a first TCI state group, and the first port group depends on the first TCI state group; the first TCI state group is one of M1 TCI state groups, where M1 is a positive integer greater than 1; the M1 port groups depend on the M1 TCI state groups.

As a sub-embodiment of the above embodiment, the M1 port groups each include ports of RS resources in the M1 TCI state groups.

As a sub-embodiment of the above embodiment, the M1 port groups each include ports of the RS resources that are QCL with the RS resources in the M1 TCI state groups.

As a sub-embodiment of the above embodiment, any TCI state group among the M1 TCI state groups corresponds to one of the M index sets, and any index set among the M index sets corresponds to one or more TCI state groups among the M1 TCI state groups; the sentence "the first index set depends on the first port group" means that the first index set is an index set corresponding to the first TCI state group among the M index sets.

As an embodiment, the first signaling is used to indicate a first CORESET (Control Resource Set) pool, the first port group depends on the first CORESET pool, the first CORESET pool includes at least one CORESET, and a second CORESET pool includes at least one CORESET.

As a sub-embodiment of the above embodiment, the first port group includes ports of RS resources in the TCI state of the first CORESET pool.

As a sub-embodiment of the above embodiment, the first port group includes ports of RS resources that are quasi-co-located with RS resources in the TCI state of the first CORESET pool.

As an embodiment, the first signaling is used to indicate a first CORESET pool, and the first port group depends on the first CORESET pool; the first CORESET pool is one of M1 CORESET pools, where M1 is a positive integer greater than 1; the M1 port groups depend on the M1 CORESET pools.

As a sub-embodiment of the above embodiment, the M1 port groups each include ports of RS resources in the TCI state of the M1 CORESET pools.

As a sub-embodiment of the above embodiment, the M1 port groups each include ports of RS resources that are QCL with the RS resources in the TCI state of the M1 CORESET pools.

As a sub-embodiment of the above embodiment, any CORESET pool among the M1 CORESET pools corresponds to one of the M index sets, and any index set among the M index sets corresponds to one or more CORESET pools among the M1 CORESET pools; the sentence "the first index set depends on the first port group" means that the first index set is an index set corresponding to the first CORESET pool among the M index sets.

As an embodiment, the sentence "the first index set depends on the first port group" means that the first index set depends on the information indicated by the first signaling.

As an embodiment, the sentence "the first index set depends on the first port group" means that the first index set depends on part of the information indicated by the first signaling.

As an embodiment, the first signaling is used to indicate the first RS resource set, and the first port group depends on the first RS resource set.

As a sub-embodiment of the above embodiment, the first port group does not belong to the ports of the first RS resource set.

As a sub-embodiment of the above embodiment, the first port group belongs to the ports of the first RS resource set.

As an embodiment, the first signaling is used to indicate a first RS resource set, and the first RS resource set is one of M1 RS resource sets; the M1 port groups depend on the M1 RS resource sets, where M1 is a positive integer greater than 1, and the first port group depends on the first RS resource set.

As a sub-embodiment of the above embodiment, the M1 port groups do not belong to the ports of the M1 RS resource sets respectively.

As a sub-embodiment of the above embodiment, the M1 port groups belong to the ports of the M1 RS resource sets respectively.

As a sub-embodiment of the above embodiment, any RS resource set among the M1 RS resource sets corresponds to one of the M index sets, and any index set among the M index sets corresponds to one or more RS resource sets among the M1 RS resource sets; The sentence "the first index set depends on the first port group" means that the first index set is an index set corresponding to the first RS resource set among the M index sets.

As an embodiment, the first signaling is used to indicate a first RS resource set, and the first RS resource set is one of M1 RS resource sets; the M1 port groups depend on the M1 RS resource sets, where M1 is a positive integer greater than 1, and the first port group depends on the first RS resource set; any RS resource set among the M1 RS resource sets corresponds to one of the M index sets, and any index set among the M index sets corresponds to one or more RS resource sets among the M1 RS resource sets; the first index set is an index set corresponding to the first RS resource set among the M index sets.

As an embodiment, "two ports being quasi-co-located" means that the two ports have at least one identical QCL parameter.

As an embodiment, "two ports being quasi-co-located" means that the two ports have the same QCL parameters.

As an embodiment, "two ports being quasi-co-located" means that the two ports have the same QCL parameters of TypeD.

As an embodiment, "two ports being quasi-co-located" means that the two ports have the same spatial reception parameters.

As an embodiment, a TCI (Transmission Configuration Indication) state indicates a quasi co-location relationship.

As an embodiment, a TCI state indicates one or more reference signal resources.

As an embodiment, a TCI state indicates at least one reference signal resource.

As an embodiment, any reference signal resource indicated by a TCI state is one of an SRS (Sounding Reference Signal) resource, a CSI-RS (Channel State Information Reference Signal) resource, or an SS/PBCH (Synchronization Signal/Physical Broadcast Channel) block resource.

As an embodiment, any reference signal resource indicated by a TCI state is a CSI-RS resource or an SS/PBCH block resource.

As an embodiment, a TCI state indicates at least one reference signal resource and a QCL (Quasi-Co-Located) parameter corresponding to each reference signal resource.

As an embodiment, a TCI state indicates at least one reference signal resource and the type of the QCL parameter corresponding to each reference signal resource.

As an embodiment, the types of the QCL parameter include TypeA, TypeB, TypeC and TypeD.

As an embodiment, the QCL parameter of TypeA includes Doppler shift, Doppler spread, average delay, and delay spread.

As an embodiment, the QCL parameter of TypeB includes Doppler shift and Doppler spread.

As an embodiment, the QCL parameter of TypeC includes Doppler shift and average delay.

As an embodiment, the QCL parameter of TypeD includes a Spatial Rx parameter.

As an embodiment, the specific definitions of TypeA, TypeB, TypeC and TypeD can be found in Section 5.1.5 of 3GPP TS38.214.

As an embodiment, the QCL parameter includes one or more of delay spread, Doppler spread, Doppler shift, average delay, or a Spatial Rx parameter.

As an embodiment, the QCL parameter includes Doppler shift, and Doppler spread.

As an embodiment, the QCL parameter includes Doppler shift, and average delay.

As an embodiment, the QCL parameter includes a Spatial Rx parameter.

As an embodiment, the QCL parameter includes at least one of a spatial transmission parameter or a spatial reception parameter.

As an embodiment, the QCL parameter includes a spatial domain receive filter.

As an embodiment, the QCL parameter includes a spatial domain filter.

As an embodiment, the QCL parameter includes at least one of a spatial domain transmit filter or a spatial domain receive filter.

As an embodiment, the specific definition of TCI state and Quasi Co-Location (QCL) can be found in Section 5.1.5 of 3GPP TS38.214.

As an embodiment, the specific definition of CORESET and TCI state can be found in Section 10 of 3GPP TS38.213.

### Embodiment 2

Embodiment 2 illustrates a schematic diagram of a network architecture according to an embodiment of the present application, as shown in FIG. 2.

FIG. 2 illustrates a network architecture 200 of LTE (Long-Term Evolution), LTE-A (Long-Term Evolution Advanced) and future 5G systems. The network architecture 200 of LTE, LTE-A and future 5G systems is referred to as an EPS (Evolved Packet System) 200. The 5G NR or LTE network architecture 200 may be referred to as a 5GS (5G System)/EPS (Evolved Packet System) 200 or some other suitable term. The 5GS/EPS 200 may include one or more UEs (User Equipments) 201, a UE 241 communicating with the UE 201 via a sidelink, an NG-RAN (Next Generation Radio Access Network) 202, a 5GC (5G Core Network)/EPC (Evolved Packet Core) 210, an HSS (Home Subscriber Server)/UDM (Unified Data Management) 220 and an Internet service 230. The 5GS/EPS 200 may be interconnected with other access networks, but these entities/interfaces are not shown for simplicity. As shown in FIG. 2, the 5GS/EPS 200 provides packet switching services, but those skilled in the art will readily appreciate that the various concepts presented throughout the present application may be extended to networks providing circuit switching services. The NG-RAN 202 includes an NR (New Radio) Node B (gNB) 203 and other gNBs 204. The gNB 203 provides user and control plane protocol terminations toward the UE 201. The gNB 203 may be connected to the other gNBs 204 via an Xn interface (e.g., backhaul). The gNB 203 may also be referred to as a base station, a base transceiver station, a radio base station, a radio transceiver, a transceiver function, a basic service set (BSS), an extended service set (ESS), a TRP (transmit receive point), or some other suitable terminology. The gNB 203 provides an access point to the 5GC/EPC 210 for the UE 201. Examples of the UE 201 include a cellular phone, a smart phone, a Session Initiation Protocol (SIP) phone, a laptop computer, a personal digital assistant (PDA), a satellite radio, a global positioning system, a multimedia device, a video device, a digital audio player (e.g., an MP3 player), a camera, a game console, a drone, an aircraft, a narrowband physical network device, a machine type communication device, a land vehicle, an automobile, a wearable device, or any other similarly functional device. Those skilled in the art may also refer to the UE 201 as a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terminology. The gNB 203 is connected to the 5GC/EPC 210 via the S1/NG interface. The 5GC/EPC 210 includes an MME (Mobility Management Entity)/AMF (Authentication Management Field)/SMF (Session Management Function) 211, other MMEs/AMFs/SMFs 214, an S-GW (Service Gateway)/UPF (User Plane Function) 212, and a P-GW (Packet Data Network Gateway)/UPF 213. The MME/AMF/SMF 211 is a control node that handles signaling between the UE 201 and the 5GC/EPC 210. Generally, the MME/AMF/SMF 211 provides bearer and connection management. All user IP (Internet Protocol) packets are transmitted through the S-GW/UPF 212, which is itself connected to the P-GW/UPF 213. The P-GW provides UE IP address allocation and other functions. The P-GW/UPF 213 is connected to the Internet service 230. The Internet service 230 includes operator-corresponding Internet protocol services, which may specifically include Internet, intranet, IMS (IP Multimedia Subsystem) and packet switching services.

As an embodiment, the first node in the present application includes the UE 201.

As an embodiment, the first node in the present application includes the UE 241.

As an embodiment, the second node in the present application includes the gNB 203.

### Embodiment 3

Embodiment 3 illustrates a schematic diagram of an embodiment of a wireless protocol architecture for a user plane and a control plane according to an embodiment of the present application, as shown in FIG. 3.

Embodiment 3 shows a schematic diagram of an embodiment for a wireless protocol architecture of a user plane and a control plane according to the present application, as shown in FIG. 3. FIG. 3 is a schematic diagram illustrating an embodiment of a radio protocol architecture for a user plane 350 and a control plane 300. FIG. 3 shows the radio protocol architecture for the control plane 300 between a first communication node device (UE, gNB, or RSU in V2X) and a second communication node device (gNB, UE, or RSU in V2X), or between two UEs, using three layers: Layer 1, Layer 2, and Layer 3. Layer 1 (L1 layer) is the lowest layer and implements various PHY (physical layer) signal processing functions. The L1 layer will be referred to as PHY 301 herein. Layer 2 (L2 layer) 305 is above PHY 301 and is responsible for the link between the first communication node device and the second communication node device, or between two UEs. The L2 layer 305 includes an MAC (Medium Access Control) sublayer 302, an RLC (Radio Link Control) sublayer 303, and a PDCP (Packet Data Convergence Protocol) sublayer 304, which terminate at the second communication node device. The PDCP sublayer 304 provides multiplexing between different radio bearers and logical channels. The PDCP sublayer 304 also provides security by encrypting data packets, and provides support for inter-zone mobility of the first communication node device between the second communication node device. The RLC sublayer 303 provides segmentation and reassembly of upper layer data packets, retransmission of lost data packets, and reordering of data packets to compensate for out-of-order reception due to HARQ. The MAC sublayer 302 provides multiplexing between logical channels and transport channels. The MAC sublayer 302 is also responsible for allocating various radio resources (e.g., resource blocks) in a cell between the first communication node devices. The MAC sublayer 302 is also responsible for HARQ operations. The RRC (Radio Resource Control) sublayer 306 in Layer 3 (L3 layer) in the control plane 300 is responsible for obtaining radio resources (i.e., radio bearers) and configuring the lower layers using RRC signaling between the second communication node device and the first communication node device. The radio protocol architecture for the user plane 350 includes Layer 1 (L1 layer) and Layer 2 (L2 layer). The radio protocol architecture for the first communication node device and the second communication node device in the user plane 350 is substantially the same as the corresponding layers and sublayers in the control plane 300 for the physical layer 351, the PDCP sublayer 354 in the L2 layer 355, the RLC sublayer 353 in the L2 layer 355, and the MAC sublayer 352 in the L2 layer 355, but the PDCP sublayer 354 also provides header compression for upper layer data packets to reduce radio transmission overhead. The L2 layer 355 in the user plane 350 further includes an SDAP (Service Data Adaptation Protocol) sublayer 356, and the SDAP sublayer 356 is responsible for mapping between QoS flows and data radio bearers (DRBs) to support the diversity of services. Although not shown, the first communication node device may have several upper layers above the L2 layer 355, including a network layer (e.g., an IP layer) terminating at the P-GW on the network side and an application layer terminating at the other end of the connection (e.g., a remote UE, a server, etc.).

As an embodiment, the wireless protocol architecture in FIG. 3 is applicable to the first node in the present application.

As an embodiment, the wireless protocol architecture in FIG. 3 is applicable to the second node in the present application.

As an embodiment, the first CSI configuration information is generated in the RRC sublayer 306.

As an embodiment, the first signaling is generated in the MAC sublayer 302.

As an embodiment, the first signaling is generated in the MAC sublayer 352.

As an embodiment, the first signaling is generated in the PHY 301.

As an embodiment, the first signaling is generated in the PHY 351.

As an embodiment, the first RS resource is generated in the PHY 301.

As an embodiment, the first RS resource is generated in the PHY 351.

As an embodiment, the first RS resource group is generated in the PHY 301.

As an embodiment, the first RS resource group is generated in the PHY 351.

As an embodiment, the second RS resource group is generated in the PHY 301.

As an embodiment, the second RS resource group is generated in the PHY 351.

As an embodiment, the third RS resource group is generated in the PHY 301.

As an embodiment, the third RS resource group is generated in the PHY 351.

As an embodiment, the first CSI report is generated in the PHY 301.

As an embodiment, the first CSI report is generated in the PHY 351.

### Embodiment 4

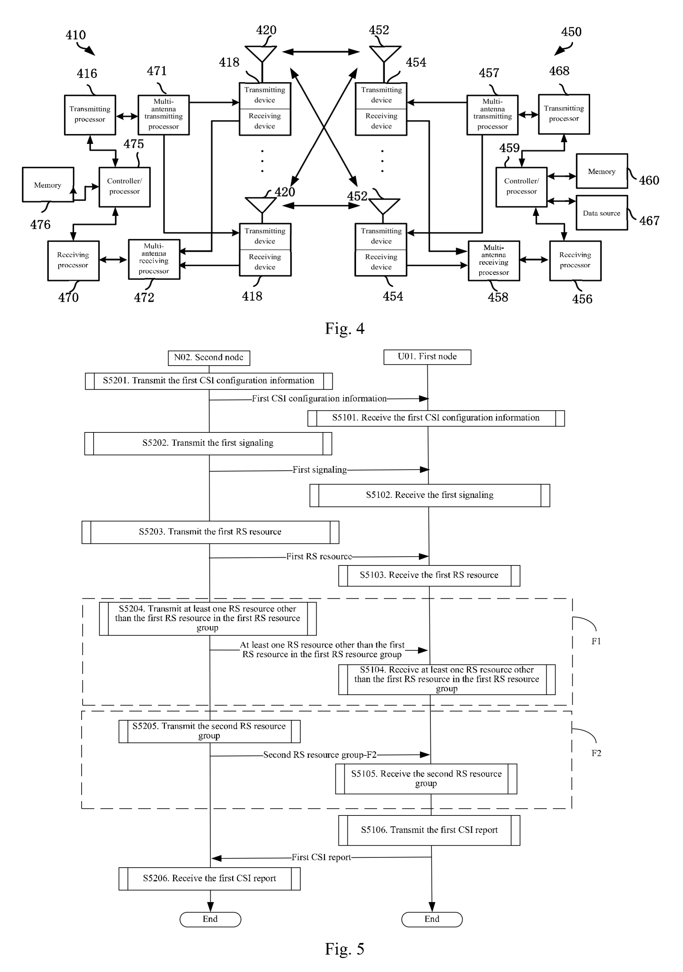

Embodiment 4 illustrates a schematic diagram of a first communication device and a second communication device according to an embodiment of the present application, as shown in FIG. 4. FIG. 4 is a block diagram of a first communication device 410 and a second communication device 450 communicating with each other in an access network.

The first communication device 410 includes a controller/processor 475, a memory 476, a receive processor 470, a transmit processor 416, a multi-antenna receive processor 472, a multi-antenna transmit processor 471, a transmitter/receiver 418, and an antenna 420.

The second communication device 450 includes a controller/processor 459, a memory 460, a data source 467, a transmit processor 468, a receive processor 456, a multi-antenna transmit processor 457, a multi-antenna receive processor 458, a transmitter/receiver 454, and an antenna 452.

In transmission from the first communication device 410 to the second communication device 450, at the first communication device 410, upper layer data packets from a core network are provided to the controller/processor 475. The controller/processor 475 implements the functionality of the L2 layer. In the DL, the controller/processor 475 provides header compression, encryption, packet segmentation and reordering, multiplexing between logical channels and transport channels, and radio resource allocation to the second communication device 450 based on various priority metrics. The controller/processor 475 is also responsible for HARQ operations, retransmission of lost packets, and signaling to the second communication device 450. The transmit processor 416 and the multi-antenna transmit processor 471 implement various signal processing functions for the L1 layer (i.e., the physical layer). The transmit processor 416 implements coding and interleaving to facilitate forward error correction (FEC) at the second communication device 450, as well as constellation mapping based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmit processor 471 performs digital spatial precoding, including codebook-based precoding and non-codebook-based precoding, and beamforming processing on the coded and modulated symbols to generate one or more parallel streams. The transmit processor 416 then maps each parallel stream to a subcarrier, multiplexes the modulated symbols with a reference signal (e.g., pilot) in the time domain and/or frequency domain, and then uses an inverse fast Fourier transform (IFFT) to generate a physical channel carrying a time domain multi-carrier symbol stream. The multi-antenna transmit processor 471 then performs a transmit analog precoding/beamforming operation on the time domain multi-carrier symbol stream. Each transmitter 418 converts a baseband multi-carrier symbol stream provided by the multi-antenna transmit processor 471 into a radio frequency stream, which is then provided to different antennas 420.

In the transmission from the first communication device 410 to the second communication device 450, at the second communication device 450, each receiver 454 receives the signal through its corresponding antenna 452. Each receiver 454 recovers the information modulated onto the radio frequency carrier, and converts the radio frequency stream into a baseband multi-carrier symbol stream, which is then provided to the receive processor 456. The receive processor 456 and the multi-antenna receive processor 458 implement various signal processing functions of the L1 layer. The multi-antenna receive processor 458 performs a receive analog precoding/beamforming operation on the baseband multi-carrier symbol stream from the receiver 454. The receive processor 456 uses a fast Fourier transform (FFT) to convert the baseband multi-carrier symbol stream after the receive analog precoding/beamforming operation from the time domain to the frequency domain. In the frequency domain, the physical layer data signal and the reference signal are demultiplexed by the receive processor 456, where the reference signal is used for channel estimation, and the data signal is restored into any parallel stream destined for the second communication device 450 after multi-antenna detection in the multi-antenna receive processor 458. The symbols on each parallel stream are demodulated and recovered in the receive processor 456, and soft decisions are generated. The receive processor 456 then decodes and deinterleaves the soft decisions to recover the upper layer data and control signals transmitted by the first communication device 410 on the physical channel. The upper layer data and control signals are then provided to the controller/processor 459. The controller/processor 459 implements the functions of the L2 layer. The controller/processor 459 may be associated with the memory 460 storing program code and data. The memory 460 may be referred to as a computer-readable medium. In DL (DownLink), the controller/processor 459 provides demultiplexing between transport and logical channels, packet reassembly, decryption, header decompression, and control signal processing to recover upper layer data packets from the core network. The upper layer data packets are then provided to all protocol layers above the L2 layer. Various control signals may also be provided to the L3 for L3 processing. The controller/processor 459 is also responsible for error detection using an acknowledgment (ACK) and/or negative acknowledgment (NACK) protocol to support HARQ operations.

In the transmission from the second communication device 450 to the first communication device 410, at the second communication device 450, a data source 467 is used to provide upper layer data packets to the controller/processor 459. The data source 467 represents all protocol layers above the L2 layer. Similar to the transmission function at the first communication device 410 described in DL, the controller/processor 459 implements header compression, encryption, packet segmentation and reordering, and multiplexing between logical and transport channels based on the radio resource allocation of the first communication device 410, and implements L2 layer functions for the user plane and the control plane. The controller/processor 459 is also responsible for HARQ operations, retransmission of lost packets, and signaling to the first communication device 410. The transmit processor 468 performs modulation mapping and channel coding processing, and the multi-antenna transmit processor 457 performs digital multi-antenna spatial precoding, including codebook-based precoding and non-codebook-based precoding, and beamforming processing. The transmit processor 468 then modulates the generated parallel stream into a multi-carrier/single-carrier symbol stream, which undergoes analog precoding/beamforming operations in the multi-antenna transmit processor 457 and is then provided to different antennas 452 via the transmitter 454. Each transmitter 454 first converts the baseband symbol stream provided by the multi-antenna transmit processor 457 into a radio frequency symbol stream, and then provides the radio frequency symbol stream to the antenna 452.

In the transmission from the second communication device 450 to the first communication device 410, the function at the first communication device 410 is similar to the receiving function at the second communication device 450 described in the transmission from the first communication device 410 to the second communication device 450. Each receiver 418 receives the radio frequency signal through its corresponding antenna 420, converts the received radio frequency signal into a baseband signal, and provides the baseband signal to the multi-antenna receive processor 472 and the receive processor 470. The receive processor 470 and the multi-antenna receive processor 472 jointly implement the L1 layer function. The controller/processor 475 implements the L2 layer function. The controller/processor 475 may be associated with the memory 476 storing program code and data. The memory 476 may be referred to as a computer-readable medium. The controller/processor 475 provides multiplexing between transmission and logical channels, packet reassembly, decryption, header decompression, and control signal processing to recover upper layer data packets from the second communication device 450. The upper layer data packets from the controller/processor 475 may be provided to the core network. The controller/processor 475 is also responsible for error detection using ACK and/or NACK protocols to support HARQ operations.

As an embodiment, the second communication device 450 includes: at least one processor and at least one memory, the at least one memory including computer program code; the at least one memory and the computer program code are configured to be used with the at least one processor. The second communication device 450 apparatus at least: receives first CSI configuration information; receives first signaling; receives a first RS resource; and transmits a first CSI report, where the first CSI configuration information is used to indicate the first RS resource, and the measurement on the first RS resource is used to generate the first CSI report; the first CSI configuration information is used to indicate M index sets, where M is a positive integer greater than 1; any index set among the M index sets includes at least one index group, and any index group in the M index sets includes at least one index; any index in the M index sets is used to indicate a port of the first RS resource, and any index group in the M index sets corresponds to a rank; the first signaling is used to determine a first port group; the first CSI report includes a first rank and a first CQI, and the calculation of the first CQI is conditioned on the ports of the first RS resource that are indicated by the first index group, and the first index group is an index group in the first index set whose corresponding rank is equal to the first rank, and the first index set depends on the first port group.

As an embodiment, the second communication device 450 includes: a memory storing a computer-readable instruction program, the computer-readable instruction program, when executed by at least one processor, generates an action, the action including: receiving first CSI configuration information; receiving first signaling; receiving a first RS resource; and transmitting a first CSI report, where the first CSI configuration information is used to indicate the first RS resource, and the measurement on the first RS resource is used to generate the first CSI report; the first CSI configuration information is used to indicate M index sets, where M is a positive integer greater than 1; any index set among the M index sets includes at least one index group, and any index group in the M index sets includes at least one index; any index in the M index sets is used to indicate a port of the first RS resource, and any index group in the M index sets corresponds to a rank; the first signaling is used to determine a first port group; the first CSI report includes a first rank and a first CQI, and the calculation of the first CQI is conditioned on the ports of the first RS resource that are indicated by the first index group, and the first index group is an index group in the first index set whose corresponding rank is equal to the first rank, and the first index set depends on the first port group.

As an embodiment, the first communication device 410 includes: at least one processor and at least one memory, the at least one memory including computer program code; the at least one memory and the computer program code are configured to be used with the at least one processor. The first communication device 410 apparatus at least: transmits first CSI configuration information; transmits first signaling; transmits a first RS resource; and receives a first CSI report, where the first CSI configuration information is used to indicate the first RS resource, and the measurement on the first RS resource is used to generate the first CSI report; the first CSI configuration information is used to indicate M index sets, where M is a positive integer greater than 1; any index set among the M index sets includes at least one index group, and any index group in the M index sets includes at least one index; any index in the M index sets is used to indicate a port of the first RS resource, and any index group in the M index sets corresponds to a rank; the first signaling is used to determine a first port group; the first CSI report includes a first rank and a first CQI, and the calculation of the first CQI is conditioned on the ports of the first RS resource that are indicated by the first index group, and the first index group is an index group in the first index set whose corresponding rank is equal to the first rank, and the first index set depends on the first port group.

As an embodiment, the first communication device 410 includes: a memory storing a computer-readable instruction program, the computer-readable instruction program, when executed by at least one processor, generates an action, the action including: transmitting the first CSI configuration information; transmitting first signaling; transmitting a first RS resource; and receiving a first CSI report, where the first CSI configuration information is used to indicate the first RS resource, and the measurement on the first RS resource is used to generate the first CSI report; the first CSI configuration information is used to indicate M index sets, where M is a positive integer greater than 1; any index set among the M index sets includes at least one index group, and any index group in the M index sets includes at least one index; any index in the M index sets is used to indicate a port of the first RS resource, and any index group in the M index sets corresponds to a rank; the first signaling is used to determine a first port group; the first CSI report includes a first rank and a first CQI, and the calculation of the first CQI is conditioned on the ports of the first RS resource that are indicated by the first index group, and the first index group is an index group in the first index set whose corresponding rank is equal to the first rank, and the first index set depends on the first port group.

As an embodiment, the first node in the present application includes the second communication device 450.

As an embodiment, the second node in the present application includes the first communication device 410.

As an embodiment, at least one of {the antenna 452, the receiver 454, the receive processor 456, the multi-antenna receive processor 458, the controller/processor 459, the memory 460, and the data source 467} is used to receive the first CSI configuration information in the present application; at least one of {the antenna 420, the transmitter 418, the transmit processor 416, the multi-antenna transmit processor 471, the controller/processor 475, and the memory 476} is used to transmit the first CSI configuration information in the present application.

As an embodiment, at least one of {the antenna 452, the receiver 454, the receive processor 456, the multi-antenna receive processor 458, the controller/processor 459, the memory 460, and the data source 467} is used to receive the first signaling in the present application; at least one of {the antenna 420, the transmitter 418, the transmit processor 416, the multi-antenna transmit processor 471, the controller/processor 475, and the memory 476} is used to transmit the first signaling in the present application.

As an embodiment, at least one of {the antenna 452, the receiver 454, the receive processor 456, the multi-antenna receive processor 458, the controller/processor 459, the memory 460, and the data source 467} is used to receive the first RS resource in the present application; at least one of {the antenna 420, the transmitter 418, the transmit processor 416, the multi-antenna transmit processor 471, the controller/processor 475, and the memory 476} is used to transmit the first RS resource in the present application.

As an embodiment, at least one of {the antenna 452, the receiver 454, the receive processor 456, the multi-antenna receive processor 458, the controller/processor 459, the memory 460, and the data source 467} is used to receive at least one RS resource other than the first RS resource in the first RS resource group in the present application; at least one of {the antenna 420, the transmitter 418, the transmit processor 416, the multi-antenna transmit processor 471, the controller/processor 475, and the memory 476} is used to transmit at least one RS resource other than the first RS resource in the first RS resource group in the present application.

As an embodiment, at least one of {the antenna 452, the receiver 454, the receive processor 456, the multi-antenna receive processor 458, the controller/processor 459, the memory 460, and the data source 467} is used to receive the second RS resource group in the present application; at least one of {the antenna 420, the transmitter 418, the transmit processor 416, the multi-antenna transmit processor 471, the controller/processor 475, and the memory 476} is used to transmit the second RS resource group in the present application.

As an embodiment, at least one of {the antenna 452, the transmitter 454, the transmit processor 468, the multi-antenna transmit processor 457, the controller/processor 459, and the memory 460} is used to transmit the first CSI report in the present application; at least one of {the antenna 420, the receiver 418, the receive processor 470, the multi-antenna receive processor 472, the controller/processor 475, and the memory 476} is used to receive the first CSI report in the present application.

### Embodiment 5

Embodiment 5 illustrates a flowchart of wireless transmission according to an embodiment of the present application, as shown in FIG. 5. In FIG. 5, a first node U01 and a second node N02 are two communication nodes transmitted through the air interface, respectively, where the steps in boxes F1 and F2 are optional.

**The first node U01** receives first CSI configuration information in step S5101; receives the first signaling in step S5102; receives the first RS resource in step S5103; receives at least one RS resource other than the first RS resource in the first RS resource group in step S5104; receives the second RS resource group in step S5105; and transmits the first CSI report in step S5106.

**The second node N02** transmits the first CSI configuration information in step S5201; transmits the first signaling in step S5202; transmits the first RS resource in step S5103; transmits at least one RS resource other than the first RS resource in the first RS resource group in step S5104; transmits the second RS resource group in step S5105; and receives the first CSI report in step S5106.

In Embodiment 5, the first CSI configuration information is used to indicate the first RS resource, and the measurement on the first RS resource is used to generate the first CSI report; the first CSI configuration information is used to indicate M index sets, where M is a positive integer greater than 1; any index set among the M index sets includes at least one index group, and any index group in the M index sets includes at least one index; any index in the M index sets is used to indicate a port of the first RS resource, and any index group in the M index sets corresponds to a rank; the first signaling is used to determine a first port group; the first CSI report includes a first rank and a first CQI, and the calculation of the first CQI is conditioned on the ports of the first RS resource that are indicated by the first index group, and the first index group is an index group in the first index set whose corresponding rank is equal to the first rank, and the first index set depends on the first port group.

As an embodiment, the first RS resource group is configured for channel measurement, and the second RS resource group is configured for interference measurement; the first CSI report includes a first RS resource indicator, and the first RS resource indicator is used to indicate the first RS resource from the first RS resource group; the first rank and the first CQI are obtained based on the first RS resource indicator.

As an embodiment, the steps in box F1 exist.

As an embodiment, the steps in box F2 exist.

As an embodiment, the steps in box F1 do not exist.

As an embodiment, the steps in box F2 do not exist.

As an embodiment, the first RS resource group includes N RS resources for channel measurement, the second RS resource group includes N RS resources for interference measurement, and the N RS resources for channel measurement correspond one-to-one to the N RS resources for interference measurement.

As a sub-embodiment of the above embodiment, a first given RS resource is any RS resource among the N RS resources for channel measurement; when the first given RS resource is used for channel measurement, only an RS resource corresponding to the first given RS resource among the N RS resources for interference measurement is used for interference measurement.

As an embodiment, the first RS resource indicator is CRI.

As an embodiment, the first RS resource indicator is used to identify the first RS resource in the first RS resource group.

As an embodiment, the first RS resource indicator includes the position of the first RS resource in the first RS resource group.

As an embodiment, the first RS resource indicator includes the index of the first RS resource in the first RS resource group.

As an embodiment, the first rank and the first CQI are generated based on the channel measurement performed on the first RS resource and the interference measurement performed on the second RS resource, and the second RS resource belongs to the second RS resource group.

As an embodiment, the first rank and the first CQI are generated based on the channel measurement performed on the first RS resource and the interference measurement performed on the second RS resource and the third RS resource, and the second RS resource belongs to the second RS resource group.

As an embodiment, the first rank and the first CQI are generated based on the channel measurement performed on the first RS resource and the interference measurement performed on the second RS resource and the third RS resource, the second RS resource belongs to the second RS resource group, and the third RS resource belongs to the third RS resource group.

As an embodiment, the sentence "the first rank and the first CQI are obtained based on the first RS resource indicator" means that the first RS resource indicator is used to indicate the first RS resource from the first RS resource group, and the first rank and the first CQI are obtained based on the channel information generated by the measurement on the first RS resource.

As an embodiment, the sentence "the first rank and the first CQI are obtained based on the first RS resource indicator" means that the first RS resource indicator is used to indicate the first RS resource from the first RS resource group, and the first rank and the first CQI are obtained based on the channel measurement performed on the first RS resource.

As an embodiment, the sentence "the first rank and the first CQI are obtained based on the first RS resource indicator" means that the first RS resource indicator is used to indicate the first RS resource from the first RS resource group, and the first rank and the first CQI are obtained based on only the first RS resource in the first RS resource group.

As an embodiment, the sentence "the first rank and the first CQI are obtained based on the first RS resource indicator" means that the first RS resource indicator is used to indicate the first RS resource from the first RS resource group, and the calculation of the first rank and the first CQI is related to only the first RS resource in the first RS resource group.

### Embodiment 6

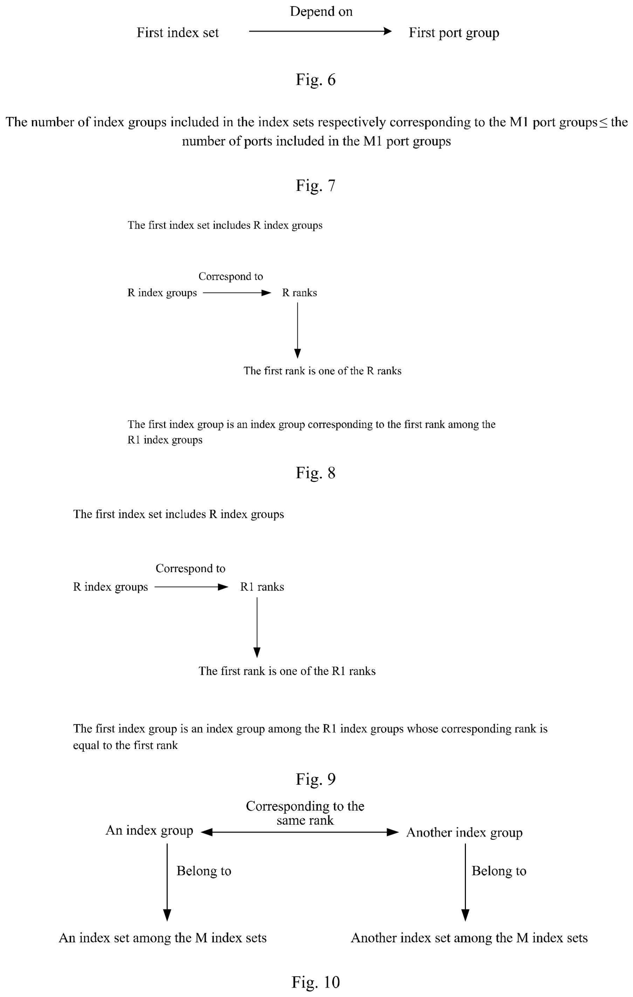

Embodiment 6 illustrates a schematic diagram of a first index set and a first port group according to an embodiment of the present application, as shown in FIG. 6.

In Embodiment 6, the first port group is one of M1 port groups, where M1 is a positive integer greater than 1; the M1 port groups each include at least one port of the first RS resource, and the M1 port groups are pairwise distinct; any port group among the M1 port groups corresponds to one of the M index sets, and any index set among the M index sets corresponds to one or more port groups among the M1 port groups; the first index set is an index set corresponding to the first port group among the M index sets; the first rank is not greater than the number of ports included in the first port group.

As an embodiment, the port of the first RS resource that is indicated by any index in the first index group is a port in the first port group.

As an embodiment, the port of the first RS resource that is indicated by any index in the first index set is a port in the first port group.

As an embodiment, the first port group includes non-zero-power ports of the first RS resource.

As an embodiment, at least one port outside the first port group among all ports of the first RS resource is zero-power.

As an embodiment, any port outside the first port group among all ports of the first RS resource is zero-power.

As an embodiment, the first port group includes active ports of the first RS resource.

### Embodiment 7

Embodiment 7 illustrates a schematic diagram of M1 port groups and corresponding index sets according to an embodiment of the present application, as shown in FIG. 7.

In Embodiment 7, the number of index groups included in the index sets corresponding to the M1 port groups is not greater than the number of ports included in the M1 port groups.

As an embodiment, a reference port group is any port group among the M1 port groups, and the reference port group corresponds to a reference index set among the M index sets; the number of index groups included in the reference index set is not greater than the number of ports included in the reference port group.

Typically, the reference port group includes the port of the first RS resource that is indicated by each index in the first index group.

Typically, at least one port in the reference port group is associated with the first port group.

As an embodiment, each port in the reference port group is associated with the first port group.

As an embodiment, some ports in the reference port group are associated with the first port group.

### Embodiment 8

Embodiment 8 illustrates a schematic diagram of the relationship between a first index group and a first rank according to an embodiment of the present application, as shown in FIG. 8.

In Embodiment 8, the first index set includes R index groups, the R index groups correspond to R ranks respectively, the R ranks are pairwise distinct, and the first rank is one of the R ranks, where R is a positive integer greater than 1; the first index group is an index group corresponding to the first rank among the R index groups.

As an embodiment, the ranks corresponding to any two index groups among the R index groups are different.

As an embodiment, the R ranks are 1, ..., R, respectively.

As an embodiment, the R ranks are R different positive integers not greater than R.

### Embodiment 9

Embodiment 9 illustrates a schematic diagram of the relationship between a first index group and a first rank according to another embodiment of the present application, as shown in FIG. 9.

In Embodiment 9, the first index set includes R index groups, each of the R index groups corresponds to one of the R1 ranks, the R1 ranks are pairwise distinct, and the first rank is one of the R1 ranks, where R is a positive integer greater than 1, and R1 is a positive integer greater than 1; the first index group is an index group among the R1 index groups whose corresponding rank is equal to the first rank.

As an embodiment, R1 is less than R.

As an embodiment, R1 is different from R.

As an embodiment, R1 is greater than R.

As an embodiment, R1 is equal to R.

As an embodiment, among the R index groups, there are two index groups whose respectively corresponding ranks are the same.

As an embodiment, among the R index groups, there are two index groups whose respectively corresponding ranks are different.

As an embodiment, the ranks corresponding to any two index groups among the R index groups are different.

### Embodiment 10

Embodiment 10 illustrates a schematic diagram of M index sets according to an embodiment of the present application, as shown in FIG. 10.

In embodiment 10, there are two index groups belonging to two index sets among the M index sets and corresponding to the same rank.

As an embodiment, the number of index groups included in the M index sets is equal to R, where R is a positive integer greater than 1. The R index groups in any index set among the M index sets correspond to R ranks, and the R ranks are pairwise distinct.

### Embodiment 11

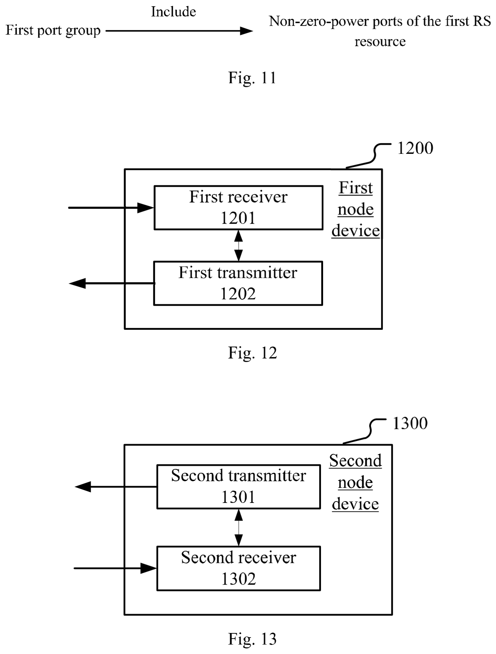

Embodiment 11 illustrates a schematic diagram of a first port group according to an embodiment of the present application, as shown in FIG. 11.

In embodiment 11, the first port group includes non-zero-power ports of the first RS resource.

As an embodiment, the first RS resource includes at least one zero-power port and at least one non-zero-power port.

Typically, the transmission power on a non-zero-power port is not 0, and the transmission power on a zero-power port is 0.

### Embodiment 12

Embodiment 12 illustrates a structural block diagram of a processing apparatus used in a first node device according to an embodiment of the present application, as shown in FIG. 12. In FIG. 12, the processing apparatus 1200 in the first node device includes a first receiver 1201 and a first transmitter 1202.

As an embodiment, the first node device is a user equipment.

As an embodiment, the first node device is a relay node device.

As an embodiment, the first receiver 1201 includes at least one of {the antenna 452, the receiver 454, the receive processor 456, the multi-antenna receive processor 458, the controller/processor 459, the memory 460, and the data source 467} in Embodiment 4.

As an embodiment, the first transmitter 1202 includes at least one of {the antenna 452, the transmitter 454, the transmit processor 468, the multi-antenna transmit processor 457, the controller/processor 459, the memory 460, and the data source 467} in Embodiment 4.

The first receiver 1201 receives the first CSI configuration information; receives first signaling; and receives a first RS resource; and
the first transmitter 1202 transmits the first CSI report.

In Embodiment 12, the first CSI configuration information is used to indicate the first RS resource, and the measurement on the first RS resource is used to generate the first CSI report; the first CSI configuration information is used to indicate M index sets, where M is a positive integer greater than 1; any index set among the M index sets includes at least one index group, and any index group in the M index sets includes at least one index; any index in the M index sets is used to indicate a port of the first RS resource, and any index group in the M index sets corresponds to a rank; the first signaling is used to determine a first port group; the first CSI report includes a first rank and a first CQI, and the calculation of the first CQI is conditioned on the ports of the first RS resource that are indicated by the first index group, and the first index group is an index group in the first index set whose corresponding rank is equal to the first rank, and the first index set depends on the first port group.

As an embodiment, the first port group is one of M1 port groups, where M1 is a positive integer greater than 1; the M1 port groups each include at least one port of the first RS resource, and the M1 port groups are pairwise distinct; any port group among the M1 port groups corresponds to one of the M index sets, and any index set among the M index sets corresponds to one or more port groups among the M1 port groups; the first index set is an index set corresponding to the first port group among the M index sets; the first rank is not greater than the number of ports included in the first port group.

As an embodiment, the number of index groups included in the index sets corresponding to the M1 port groups is not greater than the number of ports included in the M1 port groups.

As an embodiment, the first index set includes R index groups, the R index groups correspond to R ranks respectively, the R ranks are pairwise distinct, and the first rank is one of the R ranks, where R is a positive integer greater than 1; the first index group is an index group corresponding to the first rank among the R index groups.

As an embodiment, there are two index groups belonging to two index sets among the M index sets and corresponding to the same rank.

As an embodiment, the first port group includes non-zero-power ports of the first RS resource.

As an embodiment, the first receiver 1201 receives at least one RS resource other than the first RS resource in the first RS resource group; and receives a second RS resource group, where the first RS resource group is configured for channel measurement, and the second RS resource group is configured for interference measurement; the first CSI report includes a first RS resource indicator, and the first RS resource indicator is used to indicate the first RS resource from the first RS resource group; the first rank and the first CQI are obtained based on the first RS resource indicator.

### Embodiment 13

Embodiment 13 illustrates a structural block diagram of a processing apparatus in a second node device according to an embodiment of the present application, as shown in FIG. 13. In FIG. 13, the processing apparatus 1300 in the second node device includes a second transmitter 1301 and a second receiver 1302.

As an embodiment, the second node device is a base station.

As an embodiment, the second node device is a user equipment.

As an embodiment, the second node device is a relay node device.

As an embodiment, the second transmitter 1301 includes at least one of {the antenna 420, the transmitter 418, the transmit processor 416, the multi-antenna transmit processor 471, the controller/processor 475, and the memory 476} in Embodiment 4.

As an embodiment, the second receiver 1302 includes at least one of {the antenna 420, the receiver 418, the receive processor 470, the multi-antenna receive processor 472, the controller/processor 475, and the memory 476} in Embodiment 4.

The second transmitter 1301 transmits the first CSI configuration information; transmits first signaling; and transmits a first RS resource; and
the second receiver 1302 receives the first CSI report.

In Embodiment 13, the first CSI configuration information is used to indicate the first RS resource, and the measurement on the first RS resource is used to generate the first CSI report; the first CSI configuration information is used to indicate M index sets, where M is a positive integer greater than 1; any index set among the M index sets includes at least one index group, and any index group in the M index sets includes at least one index; any index in the M index sets is used to indicate a port of the first RS resource, and any index group in the M index sets corresponds to a rank; the first signaling is used to determine a first port group; the first CSI report includes a first rank and a first CQI, and the calculation of the first CQI is conditioned on the ports of the first RS resource that are indicated by the first index group, and the first index group is an index group in the first index set whose corresponding rank is equal to the first rank, and the first index set depends on the first port group.

As an embodiment, the first port group is one of M1 port groups, where M1 is a positive integer greater than 1; the M1 port groups each include at least one port of the first RS resource, and the M1 port groups are pairwise distinct; any port group among the M1 port groups corresponds to one of the M index sets, and any index set among the M index sets corresponds to one or more port groups among the M1 port groups; the first index set is an index set corresponding to the first port group among the M index sets; the first rank is not greater than the number of ports included in the first port group.

As an embodiment, the number of index groups included in the index sets corresponding to the M1 port groups is not greater than the number of ports included in the M1 port groups.

As an embodiment, the first index set includes R index groups, the R index groups correspond to R ranks respectively, the R ranks are pairwise distinct, and the first rank is one of the R ranks, where R is a positive integer greater than 1; the first index group is an index group corresponding to the first rank among the R index groups.

As an embodiment, there are two index groups belonging to two index sets among the M index sets and corresponding to the same rank.

As an embodiment, the first port group includes non-zero-power ports of the first RS resource.

As an embodiment, the second transmitter 1301 transmits at least one RS resource other than the first RS resource in the first RS resource group; and transmits a second RS resource group, where the first RS resource group is configured for channel measurement, and the second RS resource group is configured for interference measurement; the first CSI report includes a first RS resource indicator, and the first RS resource indicator is used to indicate the first RS resource from the first RS resource group; the first rank and the first CQI are obtained based on the first RS resource indicator.

A person skilled in the art can understand that all or part of the steps in the above method can be completed by instructing the relevant hardware through a program, and the program can be stored in a computer-readable storage medium, such as a read-only memory, a hard disk or a CD. Optionally, all or part of the steps in the above embodiments may also be implemented using one or more integrated circuits. Accordingly, each module unit in the above embodiments may be implemented in the form of hardware or in the form of software function modules, and the present application is not limited to any specific form of software and hardware combination. The user equipment, terminal and UE in the present application include but are not limited to drones, communication modules on drones, remote-controlled aircraft, aircraft, small aircraft, mobile phones, tablet computers, notebook computers, vehicle-mounted communication device, wireless sensors, Internet cards, Internet of Things terminals, RFID terminals, NB-IOT terminals, MTC (Machine Type Communication) terminals, eMTC (enhanced MTC) terminals, data cards, Internet cards, vehicle-mounted communication device, low-cost mobile phones, low-cost tablet computers and other wireless communication devices. The base stations or system devices in the present application include but are not limited to macrocell base stations, microcell base stations, home base stations, relay base stations, gNB (NR node B), TRP (Transmitter Receiver Point) and other wireless communication devices.

The above is only a preferred embodiment of the present application and is not intended to limit the scope of protection of the present application. Any changes and modifications made based on the embodiments described in the description, if similar partial or complete technical effects can be obtained, should be deemed obvious and belong to the scope of protection of the present invention.

## Claims

**1.** A first node device used for wireless communication, comprising:
a first receiver configured to receive first CSI configuration information, wherein the first CSI configuration information is IE CSI-ReportConfig; receive first signaling, wherein the first signaling is MAC CE signaling, or the first signaling is DCI signaling; and receive a first RS resource, wherein the first CSI configuration information is used to indicate a first CSI resource configuration and a second CSI resource configuration, the first CSI resource configuration is used to indicate the first RS resource, and the second CSI resource configuration is used to indicate a second RS resource; the first RS resource is used for channel measurement, and the second RS resource is used for interference measurement; and
a first transmitter configured to transmit a first CSI report, wherein the first CSI report configuration comprises reporting quantities of the first CSI report, and the reporting quantities of the first CSI report comprise CRI (CSI-RS Resource Indicator), RI and CQI,
wherein the first CSI configuration information is used to indicate the first RS resource, and the measurement on the first RS resource is used to generate the first CSI report; the first CSI configuration information is used to indicate M index sets, wherein M is a positive integer greater than 1; any index set among the M index sets comprises at least one index group, and the number of index groups comprised in any index set among the M index sets is not greater than the number of ports of the first RS resource; any index group in the M index sets comprises at least one index; any index in the M index sets is used to indicate a port of the first RS resource, and any index in the M index sets is a non-negative integer; any index group in the M index sets corresponds to a rank, the ranks corresponding to any two index groups belonging to the same index set among the M index sets are different, the number of indexes comprised in any index group in the M index sets is equal to the corresponding rank, and the rank corresponding to any index group in the M index sets is not greater than the number of ports of the first RS resource; the first signaling is used to determine a first port group; the first CSI report comprises a first rank and a first CQI, the calculation of the first CQI is conditioned on the ports of the first RS resource that are indicated by the first index group, the first index group is an index group in the first index set whose corresponding rank is equal to the first rank, and the first index set depends on the first port group.

**2.** The first node device according to claim 1, wherein the first CSI configuration information comprises M pieces of sub-information, and the M pieces of sub-information each comprise the M index sets; the names of the M pieces of sub-information all comprise non-PMI-PortIndication, or the names of the M pieces of sub-information all comprise PortIndexFor8Ranks.

**3.** The first node device according to claim 1 or 2, wherein the first CSI report is a non-PMI-based CSI report, or the reporting quantities of the first CSI report do not comprise PMI.

**4.** The first node device according to any one of claims 1 to 3, wherein any index in the M index sets is a non-negative integer less than the number of ports of the first RS resource.

**5.** The first node device according to any one of claims 1 to 4, wherein the port of the first RS resource that is indicated by any index in the first index set is a port in the first port group.

**6.** The first node device according to any one of claims 1 to 5, wherein the first rank is not greater than the number of ports comprised in the first port group.

**7.** The first node device according to any one of claims 1 to 6, wherein the first signaling is used to indicate the first port group; or a field in the first signaling is used to determine the first port group; or the first signaling is used to indicate a first RS resource set, the first port group depends on the first RS resource set, and the first port group belongs to a port of the first RS resource set.

**8.** The first node device according to any one of claims 1 to 7, wherein the first port group is one of M1 port groups, wherein M1 is a positive integer greater than 1; the M1 port groups each comprise at least one port of the first RS resource, and the M1 port groups are pairwise distinct; any port group among the M1 port groups corresponds to one of the M index sets, and any index set among the M index sets corresponds to one or more port groups among the M1 port groups; the first index set is an index set corresponding to the first port group among the M index sets; the first rank is not greater than the number of ports comprised in the first port group.

**9.** The first node device according to claim 8, wherein the number of index groups comprised in the index sets respectively corresponding to the M1 port groups is not greater than the number of ports comprised in the M1 port groups.

**10.** The first node device according to any one of claims 1 to 9, wherein the first index set comprises R index groups, the R index groups correspond to R ranks respectively, the R ranks are pairwise distinct, and the first rank is one of the R ranks, wherein R is a positive integer greater than 1; the first index group is an index group corresponding to the first rank among the R index groups.

**11.** The first node device according to any one of claims 1 to 10, wherein there are two index groups belonging to two index sets among the M index sets respectively and corresponding to the same rank.

**12.** The first node device according to any one of claims 1 to 11, wherein the first port group comprises non-zero-power ports of the first RS resource.

**13.** The first node device according to any one of claims 1 to 12, wherein the first node device is configured to:
receive at least one RS resource other than the first RS resource in a first RS resource group; and
receive a second RS resource group,
wherein the first CSI resource configuration is used to indicate the first RS resource group, the first RS resource belongs to the first RS resource group, the second CSI resource configuration is used to indicate the second RS resource group, and the second RS resource belongs to the second RS resource group; the first RS resource group is configured for channel measurement, and the second RS resource group is configured for interference measurement; the first CSI report comprises a first RS resource indicator, the first RS resource indicator is CRI, and the first RS resource indicator is used to indicate the first RS resource from the first RS resource group; the first rank and the first CQI are obtained based on the first RS resource indicator.

**14.** The first node device according to any one of claims 1 to 13, wherein the calculation of the first CQI being conditioned on the ports of the first RS resource that are indicated by the first index group comprises: a precoder of the ports of the first RS resource that are indicated by the first index group is an identity matrix.

**15.** The first node device according to any one of claims 1 to 14, wherein the calculation of the first CQI being conditioned on the ports of the first RS resource that are indicated by the first index group comprises: the first node calculates the first CQI based on a measurement on the ports of the first RS resource that are indicated by the first index group.

**16.** The first node device according to any one of claims 1 to 15, wherein all indexes in any index group in the M index sets are arranged in the order of layer ordering.

**17.** The first node device according to any one of claims 1 to 16, wherein the first CSI configuration information is used to indicate the first CSI resource configuration, and the first CSI resource configuration is used to indicate the first RS resource.

**18.** A second node device used for wireless communication, comprising:
a second transmitter configured to transmit first CSI configuration information, wherein the first CSI configuration information is IE CSI-ReportConfig; transmit first signaling, wherein the first signaling is MAC CE signaling, or the first signaling is DCI signaling; and transmit first RS resource, wherein the first CSI configuration information is used to indicate a first CSI resource configuration and a second CSI resource configuration, the first CSI resource configuration is used to indicate the first RS resource, and the second CSI resource configuration is used to indicate a second RS resource; the first RS resource is used for channel measurement, and the second RS resource is used for interference measurement; and
a second receiver configured to receive a first CSI report, wherein the first CSI report configuration comprises reporting quantities of the first CSI report, and the reporting quantities of the first CSI report comprise CRI (CSI-RS Resource Indicator), RI and CQI,
wherein the first CSI configuration information is used to indicate the first RS resource, and the measurement on the first RS resource is used to generate the first CSI report; the first CSI configuration information is used to indicate M index sets, wherein M is a positive integer greater than 1; any index set among the M index sets comprises at least one index group, and the number of index groups comprised in any index set among the M index sets is not greater than the number of ports of the first RS resource; any index group in the M index sets comprises at least one index; any index in the M index sets is used to indicate a port of the first RS resource, and any index in the M index sets is a non-negative integer; any index group in the M index sets corresponds to a rank, the ranks corresponding to any two index groups belonging to the same index set among the M index sets are different, the number of indexes comprised in any index group in the M index sets is equal to the corresponding rank, and the rank corresponding to any index group in the M index sets is not greater than the number of ports of the first RS resource; the first signaling is used to determine a first port group; the first CSI report comprises a first rank and a first CQI, the calculation of the first CQI is conditioned on the ports of the first RS resource that are indicated by the first index group, the first index group is an index group in the first index set whose corresponding rank is equal to the first rank, and the first index set depends on the first port group.

**19.** The second node device according to claim 18, wherein the first CSI configuration information comprises M pieces of sub-information, and the M pieces of sub-information each comprise the M index sets; the names of the M pieces of sub-information all comprise non-PMI-PortIndication, or the names of the M pieces of sub-information all comprise PortIndexFor8Ranks.

**20.** The second node device according to claim 18 or 19, wherein the first CSI report is a non-PMI-based CSI report, or the reporting quantities of the first CSI report do not comprise PMI.

**21.** The second node device according to any one of claims 18 to 20, wherein any index in the M index sets is a non-negative integer less than the number of ports of the first RS resource.

**22.** The second node device according to any one of claims 18 to 21, wherein the port of the first RS resource that is indicated by any index in the first index set is a port in the first port group.

**23.** The second node device according to any one of claims 18 to 22, wherein the first rank is not greater than the number of ports comprised in the first port group.

**24.** The second node device according to any one of claims 18 to 23, wherein the first signaling is used to indicate the first port group; or a field in the first signaling is used to determine the first port group; or the first signaling is used to indicate a first RS resource set, the first port group depends on the first RS resource set, and the first port group belongs to a port of the first RS resource set.

**25.** The second node device according to any one of claims 18 to 24, wherein the first port group is one of M1 port groups, wherein M1 is a positive integer greater than 1; the M1 port groups each comprise at least one port of the first RS resource, and the M1 port groups are pairwise distinct; any port group among the M1 port groups corresponds to one of the M index sets, and any index set among the M index sets corresponds to one or more port groups among the M1 port groups; the first index set is an index set corresponding to the first port group among the M index sets; the first rank is not greater than the number of ports comprised in the first port group.

**26.** The second node device according to claim 25, wherein the number of index groups comprised in the index sets respectively corresponding to the M1 port groups is not greater than the number of ports comprised in the M1 port groups.

**27.** The second node device according to any one of claims 18 to 26, wherein the first index set comprises R index groups, the R index groups correspond to R ranks respectively, the R ranks are pairwise distinct, and the first rank is one of the R ranks, wherein R is a positive integer greater than 1; the first index group is an index group corresponding to the first rank among the R index groups.

**28.** The second node device according to any one of claims 18 to 27, wherein there are two index groups belonging to two index sets among the M index sets respectively and corresponding to the same rank.

**29.** The second node device according to any one of claims 18 to 28, wherein the first port group comprises non-zero-power ports of the first RS resource.

**30.** The second node device according to any one of claims 18 to 29, comprising
the second transmitter configured to transmit at least one RS resource other than the first RS resource in the first RS resource group; and transmit a second RS resource group,
wherein the first CSI resource configuration is used to indicate the first RS resource group, the first RS resource belongs to the first RS resource group, the second CSI resource configuration is used to indicate the second RS resource group, and the second RS resource belongs to the second RS resource group; the first RS resource group is configured for channel measurement, and the second RS resource group is configured for interference measurement; the first CSI report comprises a first RS resource indicator, the first RS resource indicator is CRI, and the first RS resource indicator is used to indicate the first RS resource from the first RS resource group; the first rank and the first CQI are obtained based on the first RS resource indicator.

**31.** The second node device according to any one of claims 18 to 30, wherein the calculation of the first CQI being conditioned on the ports of the first RS resource that are indicated by the first index group comprises: a precoder of the ports of the first RS resource that are indicated by the first index group is an identity matrix.

**32.** The second node device according to any one of claims 18 to 31, wherein the calculation of the first CQI being conditioned on the ports of the first RS resource that are indicated by the first index group comprises: the first node calculates the first CQI based on a measurement on the ports of the first RS resource that are indicated by the first index group.

**33.** The second node device according to any one of claims 18 to 32, wherein all indexes in any index group in the M index sets are arranged in the order of layer ordering.

**34.** The second node device according to any one of claims 18 to 33, wherein the first CSI configuration information is used to indicate the first CSI resource configuration, and the first CSI resource configuration is used to indicate the first RS resource.

**35.** A method used in a first node for wireless communication, comprising:
receiving first CSI configuration information, wherein the first CSI configuration information is IE CSI-ReportConfig; receiving first signaling, wherein the first signaling is MAC CE signaling, or the first signaling is DCI signaling; and receiving a first RS resource; wherein the first CSI configuration information is used to indicate a first CSI resource configuration and a second CSI resource configuration, the first CSI resource configuration is used to indicate the first RS resource, and the second CSI resource configuration is used to indicate a second RS resource; the first RS resource is used for channel measurement, and the second RS resource is used for interference measurement; and
transmitting a first CSI report, wherein the first CSI report configuration comprises reporting quantities of the first CSI report, and the reporting quantities of the first CSI report comprise CRI (CSI-RS Resource Indicator), RI and CQI,
wherein the first CSI configuration information is used to indicate the first RS resource, and the measurement on the first RS resource is used to generate the first CSI report; the first CSI configuration information is used to indicate M index sets, wherein M is a positive integer greater than 1; any index set among the M index sets comprises at least one index group, and the number of index groups comprised in any index set among the M index sets is not greater than the number of ports of the first RS resource; any index group in the M index sets comprises at least one index; any index in the M index sets is used to indicate a port of the first RS resource, and any index in the M index sets is a non-negative integer; any index group in the M index sets corresponds to a rank, the ranks corresponding to any two index groups belonging to the same index set among the M index sets are different, the number of indexes comprised in any index group in the M index sets is equal to the corresponding rank, and the rank corresponding to any index group in the M index sets is not greater than the number of ports of the first RS resource; any index group in the M index sets corresponds to a rank; the first signaling is used to determine a first port group; the first CSI report comprises a first rank and a first CQI, the calculation of the first CQI is conditioned on the ports of the first RS resource that are indicated by the first index group, the first index group is an index group in the first index set whose corresponding rank is equal to the first rank, and the first index set depends on the first port group.

**36.** The method according to claim 35, wherein the first CSI configuration information comprises M pieces of sub-information, and the M pieces of sub-information each comprise the M index sets; the names of the M pieces of sub-information all comprise non-PMI-PortIndication, or the names of the M pieces of sub-information all comprise PortIndexFor8Ranks.

**37.** The method according to claim 35 or 36, wherein the first CSI report is a non-PMI-based CSI report, or the reporting quantities of the first CSI report do not comprise PMI.

**38.** The method according to any one of claims 35 to 37, wherein any index in the M index sets is a non-negative integer less than the number of ports of the first RS resource.

**39.** The method according to any one of claims 35 to 38, wherein the port of the first RS resource that is indicated by any index in the first index set is a port in the first port group.

**40.** The method according to any one of claims 35 to 39, wherein the first rank is not greater than the number of ports comprised in the first port group.

**41.** The method according to any one of claims 35 to 40, wherein the first signaling is used to indicate the first port group; or a field in the first signaling is used to determine the first port group; or the first signaling is used to indicate a first RS resource set, the first port group depends on the first RS resource set, and the first port group belongs to a port of the first RS resource set.

**42.** The method according to any one of claims 35 to 41, wherein the first port group is one of M1 port groups, wherein M1 is a positive integer greater than 1; the M1 port groups each comprise at least one port of the first RS resource, and the M1 port groups are pairwise distinct; any port group among the M1 port groups corresponds to one of the M index sets, and any index set among the M index sets corresponds to one or more port groups among the M1 port groups; the first index set is an index set corresponding to the first port group among the M index sets; the first rank is not greater than the number of ports comprised in the first port group.

**43.** The method according to claim 42, wherein the number of index groups comprised in the index sets respectively corresponding to the M1 port groups is not greater than the number of ports comprised in the M1 port groups.

**44.** The method according to any one of claims 35 to 43, wherein the first index set comprises R index groups, the R index groups correspond to R ranks respectively, the R ranks are pairwise distinct, and the first rank is one of the R ranks, wherein R is a positive integer greater than 1; the first index group is an index group corresponding to the first rank among the R index groups.

**45.** The method according to any one of claims 35 to 44, wherein there are two index groups belonging to two index sets among the M index sets respectively and corresponding to the same rank.

**46.** The method according to any one of claims 35 to 45, wherein the first port group comprises non-zero-power ports of the first RS resource.

**47.** The method according to any one of claims 35 to 46, comprising:
receiving at least one RS resource other than the first RS resource in a first RS resource group; and
receiving a second RS resource group,
wherein the first CSI resource configuration is used to indicate the first RS resource group, the first RS resource belongs to the first RS resource group, the second CSI resource configuration is used to indicate the second RS resource group, and the second RS resource belongs to the second RS resource group; the first RS resource group is configured for channel measurement, and the second RS resource group is configured for interference measurement; the first CSI report comprises a first RS resource indicator, the first RS resource indicator is CRI, and the first RS resource indicator is used to indicate the first RS resource from the first RS resource group; the first rank and the first CQI are obtained based on the first RS resource indicator.

**48.** The method according to any one of claims 35 to 47, wherein the calculation of the first CQI being conditioned on the ports of the first RS resource that are indicated by the first index group comprises: a precoder of the ports of the first RS resource that are indicated by the first index group is an identity matrix.

**49.** The method according to any one of claims 35 to 48, wherein the calculation of the first CQI being conditioned on the ports of the first RS resource that are indicated by the first index group comprises: the first node calculates the first CQI based on a measurement on the ports of the first RS resource that are indicated by the first index group.

**50.** The method according to any one of claims 35 to 49, wherein all indexes in any index group in the M index sets are arranged in the order of layer ordering.

**51.** The method according to any one of claims 35 to 50, wherein the first CSI configuration information is used to indicate the first CSI resource configuration, and the first CSI resource configuration is used to indicate the first RS resource.

**52.** A method used in a second node for wireless communication, comprising:
transmitting first CSI configuration information, wherein the first CSI configuration information is IE CSI-ReportConfig; transmitting first signaling, wherein the first signaling is MAC CE signaling, or the first signaling is DCI signaling; and transmitting first RS resource, wherein the first CSI configuration information is used to indicate a first CSI resource configuration and a second CSI resource configuration, the first CSI resource configuration is used to indicate the first RS resource, and the second CSI resource configuration is used to indicate a second RS resource; the first RS resource is used for channel measurement, and the second RS resource is used for interference measurement; and
receiving a first CSI report, wherein the first CSI report configuration comprises reporting quantities of the first CSI report, and the reporting quantities of the first CSI report comprise CRI (CSI-RS Resource Indicator), RI and CQI,
wherein the first CSI configuration information is used to indicate the first RS resource, and the measurement on the first RS resource is used to generate the first CSI report; the first CSI configuration information is used to indicate M index sets, wherein M is a positive integer greater than 1; any index set among the M index sets comprises at least one index group, and the number of index groups comprised in any index set among the M index sets is not greater than the number of ports of the first RS resource; any index group in the M index sets comprises at least one index; any index in the M index sets is used to indicate a port of the first RS resource, and any index in the M index sets is a non-negative integer; any index group in the M index sets corresponds to a rank, the ranks corresponding to any two index groups belonging to the same index set among the M index sets are different, the number of indexes comprised in any index group in the M index sets is equal to the corresponding rank, and the rank corresponding to any index group in the M index sets is not greater than the number of ports of the first RS resource; the first signaling is used to determine a first port group; the first CSI report comprises a first rank and a first CQI, the calculation of the first CQI is conditioned on the ports of the first RS resource that are indicated by the first index group, the first index group is an index group in the first index set whose corresponding rank is equal to the first rank, and the first index set depends on the first port group.

**53.** The method according to claim 52, wherein the first CSI configuration information comprises M pieces of sub-information, and the M pieces of sub-information each comprise the M index sets; the names of the M pieces of sub-information all comprise non-PMI-Portlndication, or the names of the M pieces of sub-information all comprise PortIndexFor8Ranks.

**54.** The method according to claim 52 or 53, wherein the first CSI report is a non-PMI-based CSI report, or the reporting quantities of the first CSI report do not comprise PMI.

**55.** The method according to any one of claims 52 to 54, wherein any index in the M index sets is a non-negative integer less than the number of ports of the first RS resource.

**56.** The method according to any one of claims 52 to 55, wherein the port of the first RS resource that is indicated by any index in the first index set is a port in the first port group.

**57.** The method according to any one of claims 52 to 56, wherein the first rank is not greater than the number of ports comprised in the first port group.

**58.** The method according to any one of claims 52 to 57, wherein the first signaling is used to indicate the first port group; or a field in the first signaling is used to determine the first port group; or the first signaling is used to indicate a first RS resource set, the first port group depends on the first RS resource set, and the first port group belongs to a port of the first RS resource set.

**59.** The method according to any one of claims 52 to 58, wherein the first port group is one of M1 port groups, wherein M1 is a positive integer greater than 1; the M1 port groups each comprise at least one port of the first RS resource, and the M1 port groups are pairwise distinct; any port group among the M1 port groups corresponds to one of the M index sets, and any index set among the M index sets corresponds to one or more port groups among the M1 port groups; the first index set is an index set corresponding to the first port group among the M index sets; the first rank is not greater than the number of ports comprised in the first port group.

**60.** The method according to claim 59, wherein the number of index groups comprised in the index sets respectively corresponding to the M1 port groups is not greater than the number of ports comprised in the M1 port groups.

**61.** The method according to any one of claims 52 to 60, wherein the first index set comprises R index groups, the R index groups correspond to R ranks respectively, the R ranks are pairwise distinct, and the first rank is one of the R ranks, wherein R is a positive integer greater than 1; the first index group is an index group corresponding to the first rank among the R index groups.

**62.** The method according to any one of claims 52 to 61, wherein there are two index groups belonging to two index sets among the M index sets respectively and corresponding to the same rank.

**63.** The method according to any one of claims 52 to 62, wherein the first port group comprises non-zero-power ports of the first RS resource.

**64.** The method according to any one of claims 52 to 63, comprising:
transmitting at least one RS resource other than the first RS resource in the first RS resource group; and
transmitting a second RS resource group,
wherein the first CSI resource configuration is used to indicate the first RS resource group, the first RS resource belongs to the first RS resource group, the second CSI resource configuration is used to indicate the second RS resource group, and the second RS resource belongs to the second RS resource group; the first RS resource group is configured for channel measurement, and the second RS resource group is configured for interference measurement; the first CSI report comprises a first RS resource indicator, the first RS resource indicator is CRI, and the first RS resource indicator is used to indicate the first RS resource from the first RS resource group; the first rank and the first CQI are obtained based on the first RS resource indicator.

**65.** The method according to any one of claims 52 to 64, wherein the calculation of the first CQI being conditioned on the ports of the first RS resource that are indicated by the first index group comprises: a precoder of the ports of the first RS resource that are indicated by the first index group is an identity matrix.

**66.** The method according to any one of claims 52 to 65, wherein the calculation of the first CQI being conditioned on the ports of the first RS resource that are indicated by the first index group comprises: the first node calculates the first CQI based on a measurement on the ports of the first RS resource that are indicated by the first index group.

**67.** The method according to any one of claims 52 to 66, wherein all indexes in any index group in the M index sets are arranged in the order of layer ordering.

**67.** The method according to any one of claims 52 to 66, wherein all indexes in any one of the M index sets are arranged in a layer order.

**68.** The method according to any one of claims 52 to 67, wherein the first CSI configuration information is used to indicate the first CSI resource configuration, and the first CSI resource configuration is used to indicate the first RS resource
